# EUROPÄISCHE PATENTSCHRIFT

(11) **EP 2 548 706 B1**
(45) Veröffentlichungstag und Bekanntmachung des Hinweises auf die Patenterteilung: **12.03.2014**
(21) Anmeldenummer: 12176530.9
(22) Anmeldetag: 16.07.2012
(51) Int. Cl.: B25J 15/02, B25J 15/04

(54) **Greiferzange mit austauschbaren Greiferfingern**
Gripper clamp with exchangeable gripper fingers
Pince de préhension avec doigts de pince interchangeables

(30) Priorität: 21.07.2011 CH 12182011
(43) Veröffentlichungstag der Anmeldung: 23.01.2013
(73) Patentinhaber: Tecan Trading AG, 8708 Männedorf (CH)
(72) Erfinder: Bieler, Tino, 8303 Bassersdorf (CH)
(74) Vertreter: OK pat AG

(56) Entgegenhaltungen:
- WO-A2-2008/009828
- DE-A1- 3 705 884
- DE-A1- 3 715 140
- GB-A- 2 130 550
- US-A- 5 360 249

## Beschreibung

Die Erfindung betrifft eine Greiferzange mit in diese Greiferzange reversibel einsetzbaren Greiferfingern zum Ergreifen und Absetzen von Objekten. Zudem betrifft die Erfindung einen Roboter und Verfahren zum robotisierten Aufnehmen und Abgeben von Greiferfingern mit einer solchen Greiferzange. Derartige Greiferzangen umfassen üblicherweise zwei die Greiferfinger tragenden Greiferbacken, die an Linearführungen beweglich befestigt und gegen einander und voneinander weg bewegbar ausgebildet sind. Dadurch können auch die daran angebrachten zwei Greiferfinger exakt gegen einander oder auseinander bewegt werden, so dass Objekte gezielt aufgenommen und wieder abgesetzt werden können. Derartige Greifer werden Parallel-Greifer genannt.

Aus dem Stand der Technik sind Parallel-Greifer zum Greifen von Werkstücken seit langem bekannt. So offenbart EP 0 022 331 B1 einen Parallel-Greifer, dessen Greifer-Finger an je einem Trum eines über zwei Umlenkzahnräder gespannten Endlos-Zahnriemens befestigt sind. In einer Drehrichtung der Umlenkzahnräder bewegen sich die beiden Greifer-Finger synchron gegeneinander, in der anderen Drehrichtung ebenso synchron auseinander. Die Greiferfinger bewegen sich dabei immer spiegelsymmetrisch gegenüber einer zentralen Achse zwischen und gleichgerichtet zu den Drehachsen der beiden Umlenkzahnräder. Angetrieben wird dieser Parallel-Greifer mit einem Hydraulikantrieb, der über zwei Ventile gesteuert ist. Die Greiferfinger sind somit mittels eines gemeinsamen, von einem Motorantrieb angetriebenen Zahnriemens gegen einander und voneinander weg bewegbar ausgebildet.

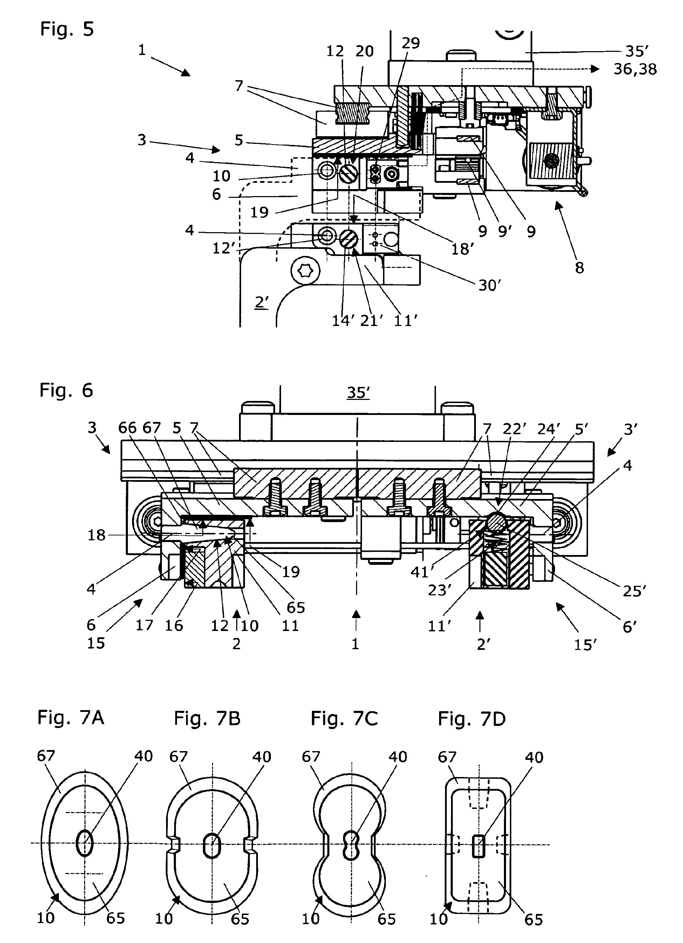

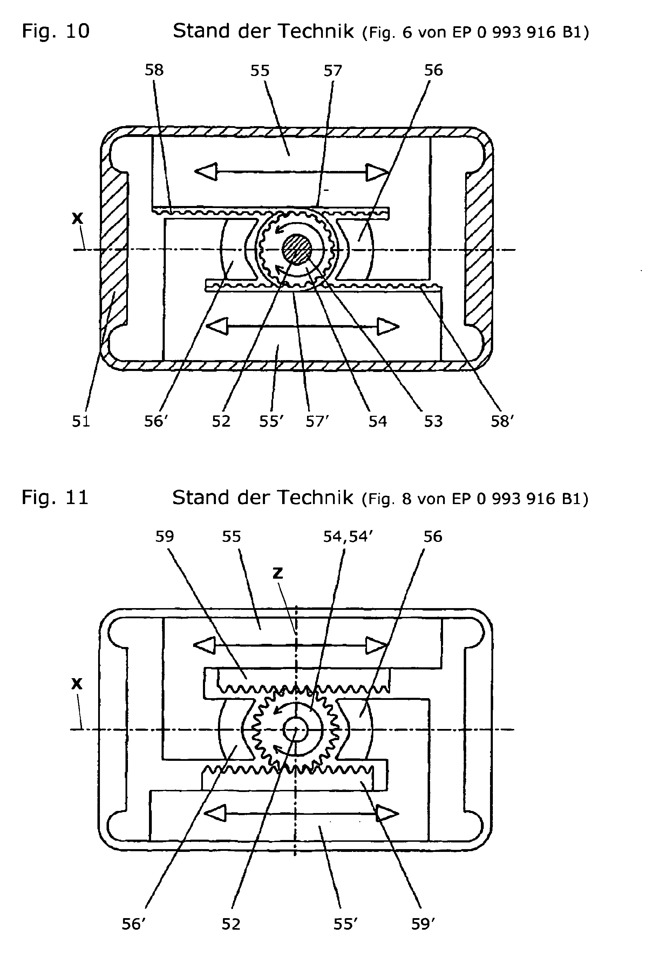

Aus einem europäischen Patent des aktuellen Anmelders sind ebenfalls Parallel-Greifer bekannt (vgl. EP 0 993 916 B1: *Fig. 5* und *6* bzw. *Fig. 7* und *8*), deren Greifer ein Greifergehäuse und ein Zangengehäuse umfasst. Querschnitte durch diese Zangengehäuse sind in der aktuellen Patentanmeldung in den Figuren 10 und 11 wiedergegeben. Um Verwechslungen mit den Bezugszeichen der vorliegenden Patentanmeldung zu vermeiden werden im Folgenden die in EP 0 993 916 B1 verwendeten Bezugszeichen kursiv und die hier für die gleichen Bestandteile verwendeten Bezugszeichen standardmässig dargestellt: Gemäss EP 0 993 916 B1 sind in einem Zangengehäuse (*17*= 51) zwei Greiferfinger (*40a,40b*= 56,56') beweglich gelagert, welche über einen zu einer Drehachse (*36*= 52) koaxialen Greiferbolzen (*37*= 53) mit einer Stellwelle derart in Wirkverbindung stehen, dass Drehungen dieser Stellwelle in Greiferbewegungen der zwei Greiferfinger (*40a,40b*= 56,56') umgesetzt werden. Dabei sind diese Greiferfinger (*40a,40b*= 56,56') an zwei verschiebbar im Zangengehäuse (*17*= 51) gelagerten Schiebern (*39a,39b=* 55,55') befestigt und stehen mit dem Greiferbolzen (*37*= 53) derart in Wirkverbindung, das Drehungen des Greiferbolzens (*37*= 53), der mindestens ein zwischen den Schiebern (*39a,39b=* 55,55') angeordnetes Zahnrad (*38a,38b*= 54,54') trägt, in entsprechend gegen einander gerichtete Verschiebungen der Schieber (*39a,39b=* 55,55') umgesetzt werden.

Gemäss einer ersten offenbarten Variante (vgl. EP 0 993 916 B1: *Fig.* 6= Fig. 10) läuft über das mindestens eine Zahnrad (*38a,38b*= 54,54') ein vom Vorderende einer Flanke (*41a*= 57) des ersten Schiebers (*39a*= 55) ausgehender erster Zahnriemen (*42a*= 58) zu einem Hinterende einer Flanke (*41b*= 57') des zweiten Schiebers (*39b*= 55') und - in bezüglich der Drehachse (*36*= 52) umgekehrtem Drehsinn - ein von einem Vorderende der Flanke (*41b*= 57') des zweiten Schiebers (*39b*= 55') ausgehender zweiter Zahnriemen (*42b*= 58') zu einem Hinterende der Flanke (*41a*= 57) des ersten Schiebers (*39a*= 55).

Gemäss einer zweiten offenbarten Variante mit ähnlicher Wirkweise (vgl. EP 0 993 916 B1: *Fig. 8*= Fig. 11) tragen die Schieber (*39a,39b*= 55,55') jeweils mit Verzahnungen versehene Zahnstangen (*52a,52b*= 59,59'), mit denen das mindestens eine Zahnrad (*38a,38b*= 54,54') direkt eingreift.

Parallel-Greifer der Firma Schunk GmbH & Co KG (D-74348 Lauffen/Neckar, Deutschland) sind mit ihrem Riemenantrieb und der eingesetzten Linearführung ähnlich aufgebaut, verfügen jedoch über einen variablen Elektroantrieb. Der Parallel-Greifer mit dem eingesetztem, bürstenlosen Servomotor, dessen Greifkraft annähernd auf 1 bis 2 N reduziert werden kann, eignet sich insbesondere auch für den Laborbereich, wo oft eine sehr geringe Greifkraft verlangt wird.

Aus der Maschinenindustrie sind Robotergreifer mit austauschbaren Werkzeugen bekannt. So offenbart z.B. US 6,199,928 B1 einen motorisch aktivierbaren Kuppler zum Verbinden eines Werkstückgreifers mit einer Manipuliervorrichtung. Ausgetauscht werden hier immer die ganze Greifvorrichtung und nicht nur die Greiferfinger. Das Gleiche gilt auch für das Dokument US, 5,163,729, das einen zahnstangengetriebenen bzw. pneumatisch getriebenen Parallel-Greifer offenbart, dessen Greiferfinger jedoch angeschraubt sind. Die Dokumente US 4,759,686, US 4,993,132 und US 4,995,493 offenbaren austauschbare Greifer oder Werkzeuge, welche mittels eines Schnappmechanismus, mittels einer zentralen Schraubspindel oder mittels magnetischer Kraft am Roboter befestigt werden. Das Dokument US 4,995,493 offenbart die Verwendung eines Werkzeugs mit einem konischen Haltedorn, dessen Frontfläche magnetisch so lange am Roboter gehalten wird, bis eine zu grosse seitliche Kraft auf das Werkzeug wirkt, die das Werkzeug aus dem Haltedorn auslöst und vom Roboter ohne Schaden abtrennt.

Aus dem Stand der Technik bekannte Parallel-Greifer zeichnen sich normalerweise dadurch aus, dass deren Greiferfinger nur mittels Einsatz von Werkzeugen abmontiert bzw. ausgewechselt werden können. Demgemäss können bei traditionellen Parallel-Greifern die Greiferfinger nicht ohne Eingreifen eines Technikers ausgetauscht werden. Insbesondere für den Einsatz von beispielsweise in biochemischen oder biologisch-medizinischen Laboratorien verwendeten Hochdurchsatz-Arbeitsplattformen (z.B. des Typs Freedom EVO^{®} der Tecan Trading AG, CH-8708 Männedorf, Schweiz) wären jedoch Parallel-Greifer wünschbar, die austauschbare Greiferfinger besitzen und dadurch noch vielseitiger eingesetzt werden könnten.

Eine Ausnahme bilden die Dokumente DE 35 13 893 A1 und JP 2007 136 587, die beide austauschbare Greiferfinger offenbaren. Dabei betrifft DE 35 13 893 A1 relativ zueinander verstellbare Backen oder Halter, die in einer Schlittenführung eines Greifers für Werkstücke geführt und mittels einer motorgetriebenen Zugspindel langhubig verschiebbar sind, wobei die Halter mit einer Schnellwechselkupplung für die Fingerelemente versehen sind. Die Fingerelemente sind dank der offenbarten Steckkupplung vollautomatisch auswechselbar, indem sie einen Kupplungsschaft aufweisen, der verdrehsicher im jeweiligen Backen oder Halter einrastet. Im Dokument JP 2007 136 587 werden die Greiferfinger eingeklemmt zwischen zwei an Backen oder Haltern angeordneten Blattfedern gehalten; werden die Greiferfinger gegen den Raum zwischen den Backen abgekippt, lösen sie sich von den Blattfedern und können entfernt werden. Währenddem sich die in JP 2007 136 587 offenbarte Ausführungsform nicht zum robotisierten Aufnehmen, Abgeben und Ersetzen der Greiferfinger eignet, stellt DE 35 13 893 A1 gerade eine solche Lösung bereit.

Aus US 5,256,128 ist ein Greiferfinger-Austauschmechanismus für Kleinroboter bekannt. Derartige Roboter sind vor allem in Laboratorien einsetzbar, in denen teilweise mit Gefässen gearbeitet wird, deren Inhalt gefährlich ist (Ansteckungsgefahr, ätzender oder giftiger Inhalt, Gefahr der Übertragung von Erregern auf andere Behälter) oder durch bestimmte Reaktionen gefährlich werden kann. Den jeweiligen Sicherheitsvorkehrungen entsprechend kommen oft unterschiedliche Gefässe zum Einsatz, so dass der Laborroboter fähig sein muss, diese unterschiedlichen Gefässe, wie z.B. Probenröhrchen, Mikroplatten oder Mikroröhrchen sicher zu greifen und zu transportieren. Den Verfahrensabläufen und den jeweils eingesetzten Behältern entsprechend kommen mit unterschiedliche Greiferfingern bestückte Robotergreifer abwechselnd zum Einsatz, so dass die Greiferfinger nach Bedarf automatisch, d.h. robotisiert und mit möglichst wenig Kraftaufwand ausgetauscht werden sollen. US 5,256,128 offenbart eine oder mehrere Greiferfinger-Halterungen, die dem Roboterarm ein Paar speziell dimensionierte und ausgestattete Greiferfinger mit ihren individuellen Wechselplatten präsentiert. Dieser Roboterarm umfasst zwei Greiferbacken mit je einem integrierten Kupplungsmechanismus. Durch Absenken der Greiferbacken auf die Wechselplatten der bereitgestellten Greiferfinger und durch Zusammenziehen der Backen und damit der Wechselplatten mit den Greiferfingern wird der Kupplungsmechanismus betätigt und damit die Wechselplatten an die Greiferbacken angekoppelt.

Parallel-Greifer mit auswechselbaren Greiferfingern sind auch aus den Dokumenten GB 2 130 550 A, DE 37 15 140 A1 und US 5,360,249 bekannt. Diese Greiferfinger sind mittels eines Verriegelungsmechanismus sicher mit den jeweiligen Greiferbacken verbunden, wobei der Verriegelungsmechanismus jeweils als an den Greiferbacken angeordneter Schiebestab (vgl. GB 2 130 550 A), Schiebeschlitten (vgl. DE 37 15 140 A1) oder als Schnapphebelpaar (vgl. US 5,360,249) ausgebildet ist.

Eine einfachere Ausführungsform eines Parallel-Greifers mit auswechselbaren Greiferfingern ist aus DE 37 05 884 A1 bekannt. Zum Aufnehmen von Greiferfingern (in DE 37 05 884 A1 als "Greiferbacken" bezeichnet) aus einem Greiferfinger-Magazin werden die Greiferbacken (in DE 37 05 884 A1 als "Greiferfinger" bezeichnet) linear gegeneinander bewegt. Jeder aufzunehmende Greiferfinger weist jeweils mehrere Zentrierstifte auf, die formschlüssig in entsprechende Aussparungen der bewegbaren Greiferbacken eingreifen. Mittels eines Elektromagneten werden dann die Greiferfinger an den Greiferbacken gehalten.

Die Aufgabe der vorliegenden Erfindung ist es, alternative Ausführungsformen von Greiferzangen mit austauschbaren Greiferfingern zum Ergreifen und Absetzen von Objekten bereitzustellen, die sich vorzugsweise für den Einsatz bei robotisierten Laboranlagen eignen.

Diese Aufgabe wird gemäss einem ersten Aspekt dadurch gelöst, dass eine Greiferzange mit austauschbaren Greiferfingern zum Ergreifen und Absetzen von Objekten mit den Merkmalen des unabhängigen Anspruchs 1 vorgeschlagen wird. Diese Greiferzange umfasst zwei Greiferbacken, die je einen zu einer ersten Achse parallelen ersten Backenflansch umfassen, wobei diese beiden Greiferbacken mit ihrem jeweils ersten Backenflansch an zumindest einer Linearführung beweglich befestigt und entlang dieser zumindest einen Linearführung mittels zumindest eines Antriebs in Richtung der ersten Achse gegen einander und voneinander weg bewegbar ausgebildet sind.

Die erfindungsgemässe Greiferzange/Greiferfinger-Kombination ist dadurch gekennzeichnet, dass jeder der beiden Greiferbacken einen Haltedorn mit einem Haltekonus und mit einer Halteachse umfasst, wobei jeder der beiden Greiferfinger reversibel in je einen der Greiferbacken der Greiferzange einsetzbar ausgebildet ist, indem er eine Fingerbasis umfasst, die eine zum jeweils entsprechenden Haltekonus des Haltedorns der Greiferzange komplementäre Vertiefung aufweist, und wobei der Haltekonus dadurch definiert ist, dass seine Länge mindestens einen Drittel seines grössten Durchmessers beträgt, und dass sein kleinster Durchmesser höchstens 90% des grössten Konus-Durchmessers beträgt.

Die erfindungsgemässe Greiferzange/Greiferfinger-Kombination ist zudem dadurch gekennzeichnet, dass die beiden Greiferbacken und die Fingerbasen der beiden Greiferfinger Haltemittel umfassen, welche die Greiferfinger in einer Anschlagsposition am jeweiligen Greiferbacken halten, und dass die beiden Greiferbacken und die Fingerbasen der beiden Greiferfinger Stabilisierungsmittel umfassen, die so ausgebildet sind, dass sie in Wirkkombination mit dem Haltekonus ein Abkippen der Greiferfinger um die Halteachse verhindern.

Vorzugsweise sind die beiden Greiferbacken mit ihrem jeweils ersten Backenflansch an einer gemeinsamen Linearführung beweglich befestigt und spiegelsymmetrisch synchron entlang dieser gemeinsamen Linearführung mittels eines gemeinsamen, motorisch angetrieben Zahnriemens in Richtung der ersten Achse gegen einander und voneinander weg bewegbar ausgebildet.

Vorzugsweise sind die Haltedorne als Haltekonus ausgebildet, wobei auch Kombinationen von Konus- und Zylinderformen bevorzugt sind. Speziell bevorzugt sind konusförmige Haltedorne die in komplementäre, konusförmigen Vertiefungen an den Greiferfingern eingreifen.

Die erfindungsgemässe Greiferzange/Greiferfinger-Kombination ist gemäss einer ersten Ausführungsform des weiteren dadurch gekennzeichnet, dass jeder der beiden Greiferbacken einen zur ersten Achse senkrechten und mit je einem ersten Backenflansch fest verbundenen zweiten Backenflansch umfasst, wobei die Haltedorne an je einem dieser zweiten Backenflansche so befestigt und gegen den jeweils anderen Haltedorn gerichtet sind, dass ihre Halteachse parallel zur ersten Achse angeordnet ist.

Die erfindungsgemässe Greiferzange/Greiferfinger-Kombination ist gemäss einer zweiten Ausführungsform des weiteren dadurch gekennzeichnet, dass jeder der beiden Greiferbacken einen zur ersten Achse parallelen und rechtwinklig mit je einem ersten Backenflansch fest verbundenen zweiten Backenflansch umfasst, wobei die Haltedorne an je einem dieser zweiten Backenflansche so befestigt und parallel zu dem jeweils anderen Haltedorn gerichtet sind, dass ihre Halteachse rechtwinklig zur ersten Achse angeordnet ist.

Die erfindungsgemässe Greiferzange/Greiferfinger-Kombination ist gemäss einer ersten Stabilisierungs-Variante bevorzugt dadurch gekennzeichnet, dass die ersten Backenflansche oder die zweiten Backenflansche Führungsstifte umfassen, die parallel zu den Haltedornen ausgerichtet und in einem Abstand zu diesen Haltedornen angeordnet sind, wobei die Fingerbasen der Greiferfinger Führungssitze umfassen, die zum Halten der Führungsstifte in der Anschlagsposition der Greiferfinger ausgebildet sind, und wobei die Führungsstifte und Führungssitze in Wirkkombination mit den Haltedornen und komplementären Vertiefungen ein Abkippen der Greiferfinger verhindern.

Die erfindungsgemässe Greiferzange/Greiferfinger-Kombination ist gemäss einer zweiten Stabilisierungs-Variante bevorzugt dadurch gekennzeichnet, dass die Fingerbasen der Greiferfinger Gegenflächen umfassen, die in der Anschlagsposition der Greiferfinger Anschlagsflächen der Backenflansche beaufschlagen und in Wirkkombination mit den Haltedornen ein Abkippen der Greiferfinger verhindern.

Die erfindungsgemässe Greiferzange/Greiferfinger-Kombination ist gemäss einer dritten Stabilisierungs-Variante bevorzugt dadurch gekennzeichnet, dass die Haltedorne der Greiferzange und die komplementären Vertiefungen jeder Fingerbasis einen entsprechenden von einer Kreisform abweichenden Querschnitt aufweisen, wodurch ein Abkippen der Greiferfinger in ihrer Anschlagsposition verhindert wird.

Diese Aufgabe wird gemäss einem zweiten Aspekt dadurch gelöst, dass ein Verfahren zum Aufnehmen von zwei Greiferfingern mit einer erfindungsgemässen Greiferzangen/Greiferfinger-Kombination mit den Merkmalen des Anspruchs 19 vorgeschlagen wird. Dieses erfindungsgemässe Verfahren ist dadurch gekennzeichnet, dass es die folgenden Schritte umfasst:
(a) Bereitstellen von zwei Greiferfingern mit einer Halterung, wobei diese Greiferfinger so zu einander ausgerichtet und der Greiferzange präsentiert werden, dass mit der Greiferzange die Greiferbacken in eine Einfahrposition gebracht werden können;
(b) Bewegen der Greiferbacken der Greiferzange in die Einfahrposition, in welcher die Haltedorne der Greiferzange den komplementären Vertiefungen der Fingerbasen der beiden Greiferfinger gerade gegenüberstehen;
(c) Eingreifen der Haltedorne der Greiferzange in die komplementären Vertiefungen der Fingerbasen der beiden Greiferfinger bis die Greiferfinger ihre Anschlagsposition an den jeweiligen Greiferbacken erreichen; und
(d) Ausfahren der mit der Greiferzange aufgenommenen Greiferfinger aus der Halterung.

Diese Aufgabe wird gemäss einem dritten Aspekt dadurch gelöst, dass ein Verfahren zum Abgeben von zwei Greiferfingern mit einer erfindungsgemässen Greiferzangen/Greiferfinger-Kombination mit den Merkmalen des Anspruchs 22 vorgeschlagen wird. Dieses erfindungsgemässe Verfahren ist dadurch gekennzeichnet, dass es die folgenden Schritte umfasst:
(a) Absenken der mit der Greiferzange aufgenommenen zwei Greiferfinger gegen eine Halterung mit einer Kulisse und Bewegen der Greiferzange bis die Greiferfinger der Greiferzange eine Endposition einnehmen; und
(b) Ausfahren der Haltedorne der Greiferzange aus den komplementären Vertiefungen der Fingerbasen der beiden Greiferfinger bis die Haltedorne der Greiferzange aus den komplementären Vertiefungen der Fingerbasis der beiden Greiferfinger austreten.

Bevorzugt bei diesem Verfahren wird, dass das Bewegen der Greiferzange in Schritt (a) erfolgt, bis Haltestifte der Kulisse in entsprechende Haltesitze der Fingerbasen eingreifen.

Weitere erfindungsgemässe Merkmale und bevorzugte Ausführungsformen ergeben sich aus den jeweils abhängigen Ansprüchen.

Vorteile der erfindungsgemässen Greiferzange umfassen:
- Die Greiferfinger werden sicher an den Greiferbacken gehalten, ohne dass eine Verriegelung vorzusehen oder auszuführen ist, wie sie z.B. aus GB 2 130 550 A, DE 37 15 140 A1 und US 5,360,249 bekannt sind.
- Das Halten der Greiferfinger an den Greiferbacken ist funktionell und strukturell unterteilt in:
   - eine Tragfunktion, die durch formschlüssig in Vertiefungen eingreifende Haltekonen bereitgestellt wird,
   - eine Abrutschsicherung, die durch Haltemittel bereitgestellt wird, und
   - in eine Kippsicherung, die durch die Sicherungsmittel bereitgestellt wird.
- Gemäss der besonders bevorzugten, ersten Ausführungsform dienen hauptsächlich die Greif-Bewegungen des Parallel-Greifers auch zur Aufnahme / Abgabe der Greiferfinger.
- Gemäss der bevorzugten, zweiten Ausführungsform dienen hauptsächlich die Bewegungen des Roboters zur Aufnahme / Abgabe der Greiferfinger

Die erfindungsgemässe Greiferzange mit austauschbaren Greiferfingern wird an Hand der beiliegenden Zeichnungen näher erläutert, wobei diese Zeichnungen beispielhafte Ausführungsformen darstellen und den Umfang der vorliegenden Erfindung nicht beschränken sollen. Dabei zeigt:
- Fig. 1: eine dreidimensionale Darstellung eines Greiferbackens einer erfindungsgemässen Greiferzange in einem dreidimensionalen Koordinatensystem, wobei eine erste Ausführungsform der erfindungsgemässen Greiferzange mit einer seitlichen Haltedornen-Anordnung und mit einer Haltedorn/Führungsstift-Kombination gemäss einer ersten Stabilisierungs-Variante und mit Magnet-Haltemitteln gezeigt ist;
- Fig. 2: Ansichten einer Greiferzange/Greiferfinger-Kombination mit seitlich angeordneten Haltedornen gemäss der ersten Ausführungsform von Fig. 1, wobei:

- Fig. 2A: eine Aufsicht auf einen erfindungsgemässen, in die Greiferzange in Fig. 2B einsetzbaren Greiferfinger;
- Fig. 2B: eine Aufsicht auf eine erfindungsgemässe Greiferzange mit einem eingesetzten Greiferfinger; und
- Fig. 2C: eine Seitenansicht auf den erfindungsgemässen, aus der Greiferzange von Fig. 2B heraus genommenen Greiferfinger zeigt;

- Fig. 3: einen gespiegelten Teil-Querschnitt durch eine Greiferzange gemäss der ersten Ausführungsform von Fig. 1 mit seitlich angeordneten Haltedornen, vor dem Einsetzen eines Greiferfingers;
- Fig. 4: einen Längsschnitt durch eine Greiferzange gemäss der ersten Ausführungsform von Fig. 1 mit seitlich angeordneten Haltedornen, mit zwei eingesetzten Greiferfingern;
- Fig. 5: einen gespiegelten Teil-Querschnitt durch eine Greiferzange gemäss der ersten Ausführungsform mit seitlich angeordneten Haltedornen und mit einer Haltedorn/Gegenflächen/Anschlagflächen-Kombination gemäss einer zweiten Stabilisierungs-Variante und mit Magnet-Haltemitteln vor dem Einsetzen eines Greiferfingers;
- Fig. 6: einen Längsschnitt durch eine Greiferzange mit zwei eingesetzten Greiferfingern, gemäss der ersten Ausführungsform mit seitlich angeordneten Haltedornen und gemäss der zweiten Stabilisierungs-Variante und mit Magnet-Haltemitteln von Fig. 5 (linke Seite); bzw. gemäss der ersten Ausführungsform und mit einer Haltedorn/Führungsstift-Kombination gemäss der ersten Stabilisierungs-Variante und mit Feder-Haltemitteln (rechte Seite);
- Fig. 7: eine Auswahl von Haltedornen für eine Greiferzange mit austauschbaren Greiferfingern gemäss einer dritten Stabilisierungs-Variante mit nichtrotationssymmetrischen Haltedornen zur Verwendung in Verbindung mit einer Haltedorn/Magnetmittel- oder Haltedorn/Federhaltemittel-Kombination, wobei:

- Fig. 7A: einen Ellipsoid-Konus;
- Fig. 7B: einen Oval-Konus;
- Fig. 7C: einen 8-Form-Konus; und
- Fig. 7D: einen annähernden Pyramidal-Konus zeigt;

- Fig. 8: das Aufnehmen und Absetzen der austauschbaren Greiferfinger aus bzw. in der Kulisse einer Halterung, wobei in:

- Fig. 8A: die Haltedorne der Greiferzange eine Einfahrposition einnehmen und den komplementären Vertiefungen der Fingerbasen der beiden Greiferfinger gerade gegenüberstehen;
- Fig.8B: die Haltedorne der Greiferzange in die komplementären Vertiefungen der Fingerbasen der beiden Greiferfinger eingreifend ihre Anschlagsposition an den jeweiligen Greiferbacken erreichen und die aufgenommenen Greiferfinger mit der Greiferzange von der Halterung abgehoben sind;
- Fig. 9: zwei Ausführungsformen der erfindungsgemässen Greiferzange / Greiferfinger-Kombination bezüglich der Anordnung der Haltedorne, der entsprechenden Fingerbasis- und Kulissen-Ausbildung sowie des dadurch bedingten Aufnahme- und Abgabe-Verfahrens für die austauschbaren Greiferfinger, wobei in:
Fig. 9A die erste Ausführungsform mit in Richtung der X-Achse ausgerichteten Haltedornen, und in
Fig. 9B die zweite Ausführungsform gezeigt ist;

- Fig. 10: Aus dem europäischen Patent EP 0 993 916 B1 bekanntes Zangengehäuse für einen Parallelgreifer (vgl. dort: *Fig. 6*) gemäss einer ersten Variante mit Zahnriemenantrieb;
- Fig. 11: Aus dem europäischen Patent EP 0 993 916 B1 bekanntes Zangengehäuse für einen Parallelgreifer (vgl. dort: *Fig. 8*) gemäss einer zweiten Variante mit Zahnstangenantrieb;
- Fig. 12: ein Beispiel eines erfindungsgemässen Parallelgreifers mit Greiferfingern zum vertikalen Erfassen von Mikroplatten;
- Fig. 13: ein Beispiel eines erfindungsgemässen Parallelgreifers mit Greiferfingern zum vertikalen Erfassen von Probenröhrchen.

Die erfindungsgemässe Greiferzange mit austauschbaren Greiferfingern bzw. die erfindungsgemässe Greiferzange / Greiferfinger-Kombination wird nun näher erläutert.

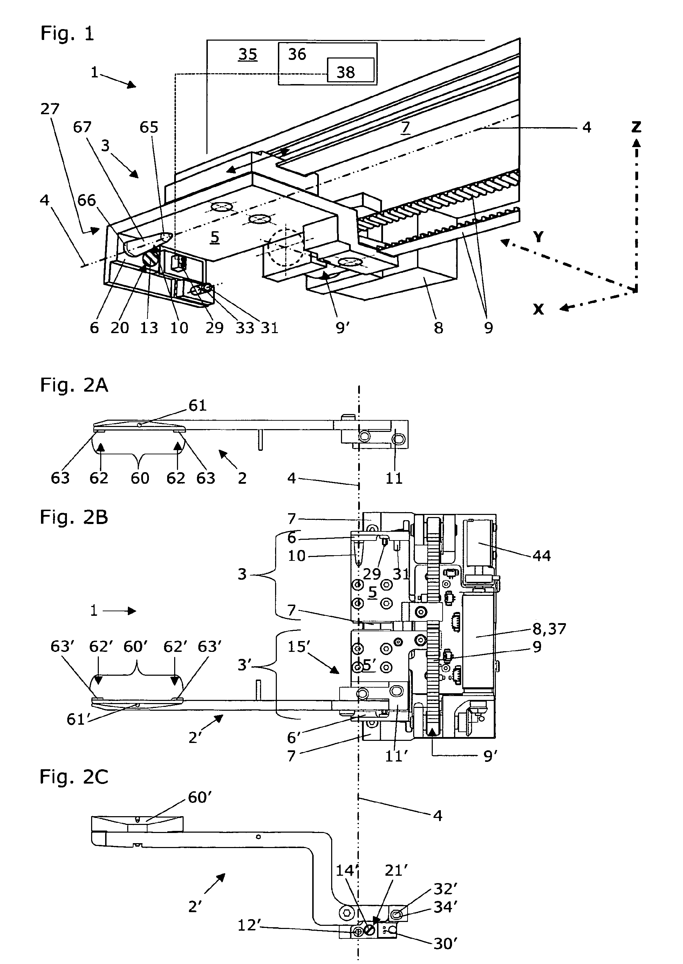

Die Figur 1 zeigt eine dreidimensionale Darstellung eines der beiden Greiferbacken 3,3' einer erfindungsgemässen Greiferzange 1 gemäss einer ersten Ausführungsform mit einer seitlichen Haltedornen-Anordnung und deren Anordnung in einem dreidimensionalen Koordinatensystem. Die seitliche Befestigung der Haltedorne 10,10 ist bevorzugt so gewählt, dass die Haltedorne 10,10' koaxial zu einer ersten Achse 4 angeordnet sind. Dabei erstreckt sich die erste Achse 4 parallel zur horizontalen X-Achse eines kartesischen Koordinatensystems.

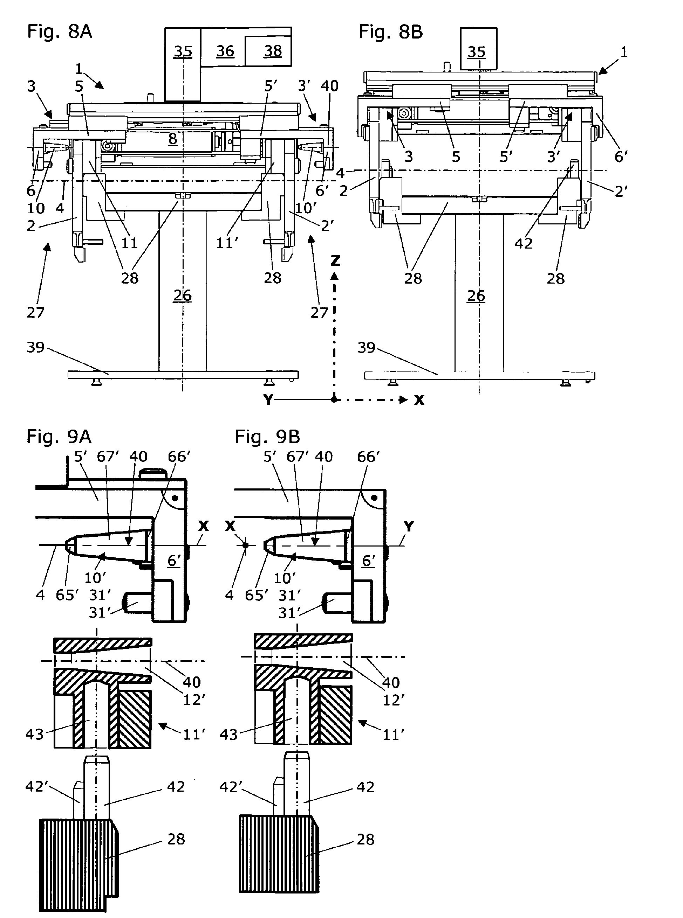

Dargestellt ist ein Teil einer Greiferzange 1 mit austauschbaren Greiferfingern 2,2' (vgl. Fig. 2) zum Ergreifen und Absetzen von Objekten. Diese Greiferzange 1 umfasst zwei Greiferbacken 3,3', von denen hier nur einer dargestellt ist. Die Greiferbacken 3,3' umfassen je einen zu der ersten Achse 4 parallelen ersten Backenflansch 5,5'. Dabei sind diese beiden Greiferbacken 3,3' mit ihrem jeweils ersten Backenflansch 5,5' an zumindest einer Linearführung 7 beweglich befestigt und entlang dieser zumindest einen Linearführung 7 mittels zumindest eines Antriebs 8 in Richtung der ersten Achse 4 gegen einander und voneinander weg bewegbar ausgebildet. Jeder der beiden Greiferbacken 3,3' umfasst einen Haltedorn 10,10' mit einer Halteachse 40 (vgl. Fig. 9), wobei jeder der beiden Greiferfinger 2,2' reversibel in je einen der Greiferbacken 3,3' der Greiferzange 1 einsetzbar ausgebildet ist, indem er eine Fingerbasis 11,11' umfasst, die eine zum jeweils entsprechenden Haltedorn 10,10' der Greiferzange 1 komplementäre Vertiefung 12,12' aufweist (vgl. Fig. 2). Dabei umfassen die beiden Greiferbacken 3,3' und die Fingerbasen 11,11' der beiden Greiferfinger 2,2' Haltemittel 13,13';14,14', welche die Greiferfinger 2,2' in einer Anschlagsposition 15,15' am jeweiligen Greiferbacken 3,3' halten (vgl. Fig. 2).

Die beiden Greiferbacken 3,3' sind mit ihrem jeweils ersten Backenflansch 5,5' an einer vorzugsweise gemeinsamen Linearführung 7 beweglich befestigt und vorzugsweise spiegelsymmetrisch synchron entlang dieser gemeinsamen Linearführung 7 mittels eines gemeinsamen, motorisch angetrieben Zahnriemens 9 in Richtung der ersten Achse 4 gegen einander und voneinander weg bewegbar ausgebildet. Ein Antrieb 8 für diesen Zahnriemen 9 ist in Fig. 1 gezeigt.

Diese bevorzugte Synchronie der Bewegungen der Greiferbacken 3,3' und damit auch der Greiferfinger 2,2' wird gemäss einer bevorzugten Version dadurch bewerkstelligt, dass der eine Greiferbacken 3 mechanisch mit dem unteren Trum des Zahnriemens 9 verbunden ist (vgl. Fig. 1), und dass der andere Greiferbacken 3' mechanisch mit dem oberen Trum des gleichen Zahnriemens 9 verbunden ist (vgl. Fig. 2).

Diese bevorzugte Synchronie der Bewegungen der Greiferbacken 3,3' und damit auch der Greiferfinger 2,2' wird gemäss einer ersten alternativen Version dadurch bewerkstelligt, dass zwei Zahnriemen 58,58' verwendet werden um die beiden Greiferbacken 3,3' gemäss der in EP 0 993 916 B1 offenbarten, ersten Variante (vgl. Fig. 10) mit zumindest einem Zahnrad 54 in Wirkverbindung zu bringen.

Diese bevorzugte Synchronie der Bewegungen der Greiferbacken 3,3' und damit auch der Greiferfinger 2,2' wird gemäss einer zweiten alternativen Version dadurch bewerkstelligt, dass zwei Zahnstangen 59,59' verwendet werden um die beiden Greiferbacken 3,3' gemäss der in EP 0 993 916 B1 offenbarten, zweiten Variante (vgl. Fig. 11) mit zumindest einem Zahnrad 54 in Wirkverbindung zu bringen.

Bei einer Greiferzange 1 mit Greiferfingern 2,2' gemäss einer ersten bevorzugten Ausführungsform umfasst jeder der beiden Greiferbacken 3,3' einen zur ersten Achse 4 senkrechten und mit je einem ersten Backenflansch 5,5' fest verbundenen zweiten Backenflansch 6,6'. Dabei sind die Haltedorne 10,10' an je einem dieser zweiten Backenflansche 6,6' so befestigt und gegen den jeweils anderen Haltedorn 10'10 gerichtet, dass ihre Halteachse 40 parallel zur ersten Achse 4 angeordnet ist. Im kartesischen Koordinatensystem sind die Halteachsen 40 der Haltedorne 10,10' damit auch parallel zur horizontalen X-Achse ausgerichtet. Besonders bevorzugt sind die beiden Haltedorne 10,10' konzentrisch auf einer gemeinsamen ersten Achse 4 gegen einander ausgerichtet.

Die Figur 1 zeigt zudem eine erfindungsgemässe Greiferzange mit einer Haltedorn / Führungsstift-Kombination gemäss einer ersten Stabilisierungs-Variante, die mit Magnet-Haltemitteln ausgerüstet ist.

Diese erste Stabilisierungs-Variante der erfindungsgemässen Greiferzange 1 mit Greiferfingern 2,2' ist im Zusammenhang mit der ersten Ausführungsform der Greiferzange 1 dadurch gekennzeichnet, dass die zweiten Backenflansche 6,6' Führungsstifte 31,31' umfassen, die parallel zu den Haltedornen 10,10' ausgerichtet und in einem Abstand zu diesen Haltedornen 10,10' angeordnet sind. Zudem umfassen die Fingerbasen 11,11' der Greiferfinger 2,2' Führungssitze 32,32', die zum Halten der Führungsstifte 31,31' in der Anschlagsposition 15,15' der Greiferfinger 2,2' ausgebildet sind (vgl. Fig. 2). Gemäss dieser ersten Stabilisierungs-Variante verhindern die Führungsstifte 31,31' und Führungssitze 32,32' in Wirkkombination mit den Haltedornen 10,10' und komplementären Vertiefungen 12,12' ein Abkippen der mit den Greiferbacken 3,3' aufgenommenen Greiferfinger 2,2'.

Die Führungsstifte 31,31' weisen bevorzugt einen kreisförmigen Querschnitt auf, und die Führungssitze 32,32' sind bevorzugt ausgewählt aus einer Gruppe, die Bohrungen, Schlitze und Langlöcher umfasst. Die Führungsstifte 31,31' und Führungssitze 32,32' umfassen vorzugsweise Einlaufkonen 33,33';34,34'.

Abweichend von der Darstellung in den Figuren 1-3, 8 und 9 können die Führungsstifte 31,31' auch als Konen ausgebildet sein, die entsprechend in konusförmige Vertiefungen, Schlitze oder Langlöcher ausgebildete Führungssitze 32,32' eingreifen. Bevorzugt weisen dabei die Schlitze oder Langlöcher abgeschrägte Flanken auf, welche in ihrer Neigung der Verjüngung der konusförmigen Führungsstifte 31,31' angepasst sind (nicht gezeigt).

Die hier abgebildete erfindungsgemässe Greiferzange 1 mit Greiferfingern 2,2' umfasst vorzugsweise erste Haltemittel 13,13' zum Halten von zwei Greiferfingern 2,2' in einer Anschlagsposition 15,15' an den jeweiligen Greiferbacken 3,3', die als erste Magnetmittel ausgebildet sind, welche an Magnetpositionen 20,20' der zweiten Backenflansche 6,6' angeordnet sind. Zweite Haltemittel 14,14' zum Halten der zwei Greiferfinger 2,2' in einer Anschlagsposition 15,15' an den jeweiligen Greiferbacken 3,3' sind vorzugsweise als zweite Magnetmittel ausgebildet, die an entsprechend platzierbaren Gegenpositionen 21,21' der Greiferfinger 2,2' angeordnet sind (vgl. Fig. 2).

Die ersten Magnetmittel sind vorzugsweise ausgewählt aus einer Gruppe, die Elektromagnete und Permanentmagnete umfasst. Die zweiten Magnetmittel sind vorzugsweise ausgewählt aus einer Gruppe, die Permanentmagnete und magnetisierbare Metallstücke umfasst. Das Material für die Permanentmagnete der ersten Haltemittel 13,13' und/oder der zweiten Haltemittel 14,14' ist vorzugsweise ausgewählt aus einer Gruppe, die Legierungen aus Eisen, Nickel und/oder Aluminium (allenfalls mit Zusätzen aus Kobalt und Mangan); keramische Werkstoffe (wie Barium- oder Strontiumhexaferrit); sowie gesinterte seltene Erden (wie Kobalt-Samarium oder Neodym-Eisen-Bor Mischungen) umfasst. Das Material für die magnetisierbaren Metallstücke der zweiten Haltemittel 14,14' ist vorzugsweise ausgewählt aus einer Gruppe, die Eisen, Nickel und eine Legierung mit einem oder beiden dieser Metalle umfasst.

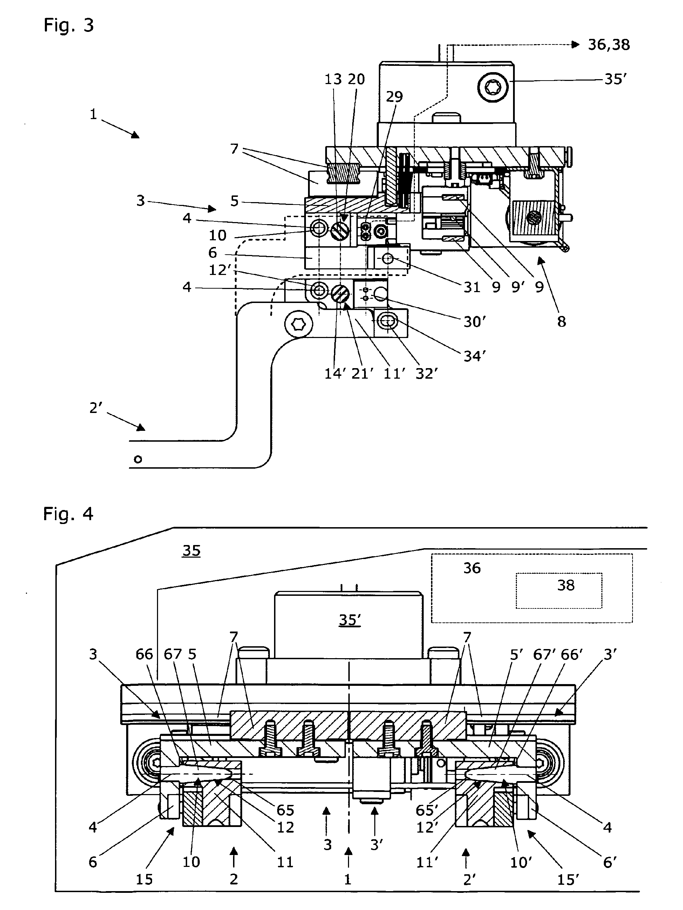

Die Figur 1 zeigt zudem einen schematisierten Roboter 35 mit einer Steuerung 36. Jeder der Greiferbacken 3,3' der Greiferzange 1 umfasst vorzugsweise eine Kontakteinheit 29,29', die mit einer Auswerteeinheit 38 der Steuerung 36 des Roboters 35 wirkverbunden ist. Vorzugsweise umfasst auch jeder der in die Greiferzange 1 einsetzbaren Greiferfinger 2,2' eine Identifikationseinheit 30,30' (vgl. Fig. 3), die in der Anschlagsposition 15,15' der Greiferfinger 2,2' mit der Kontakteinheit 29,29' in einem Lese-Kontakt steht, so dass mit der Auswerteeinheit 38 des Roboters 35 jeder Greiferfinger 2,2' identifizierbar ist.

Vorzugsweise umfassen die Haltedorne 10,10' zudem zumindest einen zylinderförmigen Abschnitt 66,66'. Dieser zylinderförmige Abschnitt 66,66' kann den Haltekonen 10,10' in der Einführrichtung in die komplementären Vertiefungen 12,12' der Fingerbasen 11,11' nachfolgen (vgl. auch Fig. 9). Dieser oder ein zusätzlicher zylinderförmigen Abschnitt 66,66' kann auch zwischen dem Haltekonus 67,67' und dem Zentrierkonus 65,65' angeordnet sein (nicht gezeigt).

Die Figur 2 zeigt Ansichten einer Greiferzange/Greiferfinger-Kombination mit seitlich angeordneten Haltedornen gemäss der ersten Ausführungsform von Fig. 1.

In Fig. 2A ist eine Aufsicht auf einen erfindungsgemässen, in die in Fig. 2B gezeigte Greiferzange 1 einsetzbaren Greiferfinger 2 mit einer Fingerbasis 11 dargestellt.

In Fig. 2B ist eine Aufsicht auf eine erfindungsgemässe Greiferzange 1 mit einem eingesetzten zum in Fig. 2A gezeigten, komplementären Greiferfinger 2' gezeigt. Die Greiferzange 1 umfasst zwei Greiferbacken 3,3', die je einen zu einer ersten Achse 4 parallelen ersten Backenflansch 5,5' umfassen. Dabei sind diese beiden Greiferbacken 3,3' mit ihrem jeweils ersten Backenflansch 5,5' hier an einer gemeinsamen Linearführung 7 beweglich befestigt und entlang dieser Linearführung 7 mittels eines Antriebs 8 in Richtung der ersten Achse 4 gegen einander und voneinander weg bewegbar ausgebildet. Jeder der beiden Greiferbacken 3,3' umfasst einen Haltedorn 10,10' mit einer Halteachse 40 und jeder der beiden Greiferfinger 2,2' ist reversibel in je einen der Greiferbacken 3,3' der Greiferzange 1 einsetzbar ausgebildet, indem er eine Fingerbasis 11,11' umfasst, die eine zum jeweils entsprechenden Haltedorn 10,10' der Greiferzange 1 komplementäre Vertiefung 12,12' aufweist. Der erste Backenflansch 5 ist mit dem oberen Trum des gemeinsamen Zahnriemens 9 mechanisch verbunden und der zweite Backenflansch 5' ist mit dem unteren Trum des gemeinsamen Zahnriemens 9 mechanisch verbunden. Vorzugsweise umfasst der Antrieb 8 ein Getriebe 37, und er ist, bevorzugt zudem mit einer Solenoidbremse 44 verbunden, die bei einem Stromausfall verhindert, dass sich die beiden Greiferbacken 3,3' unbeabsichtigt auseinander bewegen können.

In Fig. 2C ist eine Seitenansicht auf den erfindungsgemässen, aus der Greiferzange 1 von Fig. 2B heraus genommenen Greiferfinger 2' dargestellt.

Aus der Figur 2 ist ersichtlich, dass die beiden Greiferbacken 3,3' und die Fingerbasen 11,11' der beiden Greiferfinger 2,2' Haltemittel 13,13';14,14' umfassen, welche die Greiferfinger 2,2' in einer Anschlagsposition 15,15' am jeweiligen Greiferbacken 3,3' halten. Die Gegenposition 21' des Greiferfingers 2' mit dem dort angeordneten zweiten Haltemittel 14' zum Halten des Greiferfingers 2' in einer Anschlagsposition 15' an dem Greiferbacken 3' ist in Fig. 2C sichtbar. Die komplementäre Vertiefung 12' für die Aufnahme des Haltedorns 10' und der Führungssitz 32' mit dem Einlaufkonus 34' für die Aufnahme des Führungsstifts 31' sowie die Identifikationseinheit 30' des Greiferfingers 2' sind ebenfalls in Fig. 2C dargestellt.

Zudem wird bevorzugt, dass die Greiferfinger 2,2' einen beweglichen Abschnitt 60,60' umfassen, der über ein Gelenk 61,61' mit dem jeweiligen Greiferfinger 2,2' verbunden ist. Jeder bewegliche Abschnitt 60,60' umfasst vorzugsweise zwei Kontaktstellen 62,62' zum Beaufschlagen bzw. Erfassen eines Gefässes oder Laborartikels. Vorzugsweise umfasst jede Kontaktstelle 62,62' zumindest einen oder zwei Gummipuffer 63,63', die das Abrutschen eines mit dem Parallel-Greifer aufgenommenen Objekts verhindern.

Zudem ist dargestellt, dass jeder der beiden Greiferbacken 3,3' einen zur ersten Achse 4 senkrechten und mit je einem ersten Backenflansch 5,5' fest verbundenen zweiten Backenflansch 6,6' umfasst, wobei die Haltedorne 10,10' an je einem dieser zweiten Backenflansche 6,6' so befestigt und gegen den jeweils anderen Haltedorn 10'10 gerichtet sind, dass ihre Halteachse 40 parallel zur ersten Achse 4 angeordnet ist. Im kartesischen Koordinatensystem sind die Halteachsen 40 der Haltedorne 10,10' damit auch parallel zur horizontalen X-Achse ausgerichtet. Besonders bevorzugt sind die beiden Haltedorne 10,10' als Konus ausgebildet und konzentrisch auf einer gemeinsamen ersten Achse 4 gegen einander ausgerichtet.

Die Figur 3 zeigt einen gespiegelten Teil-Querschnitt durch eine an einem Roboterarm 35' befestigte Greiferzange 1 gemäss der ersten Ausführungsform von Fig. 1 mit seitlich angeordneten Haltedornen 10,10', vor dem Einsetzen eines Greiferfingers 2' in den Greiferbacken 3'. Gut sichtbar sind die Linearführung 7, an welcher der erste Backenflansch 5 gleitend fixiert ist und der zweite Backenflansch 6 mit dem Haltedorn 10, der koaxial mit der ersten Achse 4 angeordnet ist. Der erste Backenflansch 5 ist mit dem unteren Trum des Zahnriemens 9, der mit dem elektrischen Antrieb 8 bewegt wird, mechanisch verbunden. Zudem umfasst der zweite Backenflansch 6 einen mit dem Haltedorn 10 stabilisierend zusammen wirkenden Führungsstift 31; eine Magnetposition 20 mit einem dort befestigten, als Magnetmittel ausgebildeten ersten Haltemittel 13; und eine Kontakteinheit 29, die mit der Auswerteeinheit 38 der Steuerung 36 des Roboters 35 elektrisch verbunden ist.

Der Greiferfinger 2' umfasst eine Fingerbasis 11' mit einer koaxial mit der ersten Achse 4 angeordneten komplementären, vorzugsweise konischen Vertiefung 12'; einen als Langloch ausgebildeten Führungssitz 32' mit einem Einlaufkonus 34'; ein zweites als Magnetmittel ausgebildetes Haltemittel 14', das in einer Gegenposition 21' angeordnet ist und eine Identifikationseinheit 30', die Identifikationsdaten des Greiferfingers 2' für die Auswerteeinheit 38 der Steuerung 36 des Roboters 35 bereitstellt.

Die Figur 4 zeigt einen Längsschnitt durch eine am Roboterarm 35' befestigte Greiferzange 1 gemäss der ersten Ausführungsform von Fig. 1 mit seitlich an den zweiten Backenflanschen 6,6' angeordneten Haltedornen 10,10'. Die zwei eingesetzten, von den beiden Greiferbacken 3,3' aufgenommenen Greiferfinger 2,2' befinden sich in ihrer Anschlagposition 15,15', die durch den satten Sitz der Haltedorne 10,10' in den entsprechenden komplementären Vertiefungen 12,12' in den Fingerbasen 11,11' definiert ist. Die beiden ersten Backenflansche 5,5' sind mit der gemeinsamen Linearführung 7 gleitend verbunden. Die (hier nicht sichtbaren) Kontakteinheiten 29,29' an den Fingerbasen 11,11' sind elektrisch mit der Auswerteeinheit 38 der Steuerung 36 des Roboters 35 elektrisch verbunden. Der Lese-Kontakt zwischen den Kontakteinheiten 29,29' und den Identifikationseinheiten 30,30' kann beispielsweise als eine elektrisch leitende Berührung (z.B. bei der Platzierung eines EPROM im Greiferfinger) oder als eine drahtlose Kommunikation (z.B. mittels RFID Tags) ausgebildet sein.

Die Figur 5 zeigt einen gespiegelten Teil-Querschnitt durch eine an einem Roboterarm 35' angebrachten Greiferzange 1 gemäss der ersten Ausführungsform mit seitlich angeordneten Haltedornen und mit einer Haltedorn/Gegenflächen/Anschlagflächen-Kombination und mit Magnet-Haltemitteln vor dem Einsetzen eines Greiferfingers 2'. Die Haltedorn/Gegenflächen/Anschlagflächen-Kombination gemäss einer zweiten Stabilisierungs-Variante ist dadurch gekennzeichnet, dass die Fingerbasen 11,11' der Greiferfinger 2,2' Gegenflächen 16,16';18,18' umfassen, die in der Anschlagsposition 15,15' der Greiferfinger 2,2' Anschlagsflächen 17,17';19,19' der Backenflansche 6,6' beaufschlagen und in Wirkkombination mit den Haltedornen 10,10' ein Abkippen der in die Greiferzange 1 eingesetzten Greiferfinger 2,2' verhindern.

Damit unterscheidet sich diese zweite Stabilisierungs-Variante von der Ersten lediglich dadurch, dass sich an den zweiten Backenflanschen 6,6' keine Führungsstifte 31,31' und an den für diese Stabilisierungs-Variante geeigneten Greiferfingern 2,2' keine Führungssitze 32,32' befinden. Der Greiferfinger 2' umfasst somit eine Fingerbasis 11' mit einer koaxial mit der ersten Achse 4 angeordneten komplementären Vertiefung 12'; ein zweites als Magnetmittel ausgebildetes Haltemittel 14', das in einer Gegenposition 21' angeordnet ist und eine Identifikationseinheit 30', die Identifikationsdaten des Greiferfingers 2' für die Auswerteeinheit 38 der Steuerung 36 des Roboters 35 bereitstellt.

Die Figur 6 zeigt einen Längsschnitt durch eine an einem Roboterarm 35' angeordnete Greiferzange 1 mit zwei eingesetzten Greiferfingern 2,2', gemäss der ersten Ausführungsform mit seitlich angeordneten Haltedornen 10,10'. Auf der linken Seite ist die zweite Stabilisierungs-Variante von Fig. 5 mit Magnet-Haltemitteln dargestellt:

Es wird bevorzugt, dass jede Fingerbasis 11,11' eine erste Gegenfläche 16,16' umfasst, die beim Einnehmen der Anschlagsposition 15,15' an den jeweiligen Greiferbacken 3,3' parallel zu einer ersten Anschlagsfläche 17,17' des entsprechenden zweiten Backenflanschs 6,6' ausgerichtet ist. Vorzugsweise sind dabei die ersten Gegenflächen 16,16' und Anschlagsflächen 17,17' senkrecht (wie abgebildet) oder parallel (nicht gezeigt) zu der ersten Achse 4 ausgerichtet.

Des Weitern wird bevorzugt, dass jede Fingerbasis 11,11' eine zweite Gegenfläche 18,18' umfasst, die beim Einnehmen der Anschlagsposition 15,15' an den jeweiligen Greiferbacken 3,3' parallel zu einer zweiten Anschlagsfläche 19,19' des entsprechenden ersten Backenflanschs 6,6' ausgerichtet ist. Zudem wird bevorzugt, dass die zweiten Gegenflächen 18,18' und Anschlagsflächen 19,19' parallel zu der ersten Achse 4 ausgerichtet sind.

Auf der rechten Seite ist die Haltedorn/Führungsstift-Kombination gemäss der ersten Stabilisierungs-Variante mit Feder-Haltemitteln dargestellt:

Erste Federhaltemittel 22,22' sind bevorzugt als eine oder mehrere Vertiefung(en) 24,24' in zweiten Anschlagsflächen 19,19' der ersten Backenflansche 5,5' oder zweiten Backenflansche 6,6' ausgebildet. Zweite Federhaltemittel 23,23' sind bevorzugt als in einer Ausnehmung 41,41' in der jeweils zweiten Gegenfläche 18,18' federnd gelagerte Körper 25,25' ausgebildet. Diese federnd gelagerten Körper 25,25' sind vorzugsweise ausgewählt aus einer Gruppe, die Kugeln, Rundbolzen und Ellipsoide sowie Teile derselben umfasst. Die zweiten Federhaltemittel 23,23' umfassen vorzugsweise eine Feder, die ausgewählt ist aus einer Gruppe, die Spiralfedern und Blattfedern umfasst.

Allgemein gilt: Werden als Haltedorne rotationssymmetrische Konusdorne 10,10' mit einem kreisförmigen Querschnitt verwendet, so wird bevorzugt, dass die beiden Konusdorne 10,10' ein bestimmtes Verhältnis des grössten Kegel-Durchmessers zur Kegel-Länge aufweisen. Der erfindungsgemässe Haltekonus 67,67' ist dadurch definiert, dass seine Länge mindestens einen Drittel seines grössten Durchmessers beträgt, und dass sein kleinster Durchmesser höchstens 90% des grössten Konus-Durchmessers beträgt.

Speziell bevorzugt wird, dass die beiden Konusdorne 10,10' je zwei aufeinander folgende, kegelförmige Konusabschnitte umfassen, die ein Längenverhältnis von 22/3 und eine Nennweitenreduktion im Verhältnis von 5/3 und 3/1 aufweisen.

Ganz speziell bevorzugt für die Ausbildung der Haltedorne als Konusdorne 10,10' ist ein Kegelwinkel α, der 11.5° beträgt, wobei der Kegel eine Länge vom 11 mm aufweist.

Abweichend von der Darstellung in den Figuren 1-3, 8 und 9 können die Führungsstifte 31,31' auch als Konen ausgebildet sein, die entsprechend in konusförmige Vertiefungen, Schlitze oder Langlöcher eingreifen. Bevorzugt weisen dabei die Schlitze oder Langlöcher abgeschrägte Flanken auf, welche in ihrer Neigung der Verjüngung der konusförmigen Führungsstifte angepasst sind.

Die Figur 7 zeigt eine Auswahl von Haltedornen 10,10' für eine Greiferzange 1 mit austauschbaren Greiferfingern 2,2' gemäss einer dritten Stabilisierungs-Variante. Diese dritte Stabilisierungs-Variante ist dadurch gekennzeichnet, dass die Haltedorne 10,10' der Greiferzange 1 und die komplementären Vertiefungen 12,12' jeder Fingerbasis 11,11' einen entsprechenden von einer Kreisform abweichenden Querschnitt aufweisen, wodurch ein Abkippen der in die Greiferzange 1 eingesetzten Greiferfinger 2,2' in ihrer Anschlagsposition 15,15' verhindert wird. Diese Haltedorne 10,10' der Greiferzange 1 und die dazu komplementären Vertiefungen 12,12' jeder Fingerbasis 11,11' weisen bevorzugt einen von einer Kreisform abweichenden (beispielsweise pyramidenförmigen, elliptischen, ovalen, oder 8-förmigen) Querschnitt auf und werden vorzugsweise in Verbindung mit einer Haltedorn/Magnetmittel- oder Haltedorn/Federhaltemittel-Kombination verwendet. Beispielhafte Ansichten eines Ellipsoid-Konus (vgl. Fig. 7A), eines Oval-Konus (vgl. Fig. 7B), eines 8-Form-Konus (vgl. Fig. 7C) und eines annähernden Pyramidal-Konus (vgl. Fig. 7D) sind gezeigt. Falls gewünscht, können beliebig viele Einfräsungen (in Fig. 7B teilweise ausgeführt und in Fig. 7D teilweise angedeutet) in den Oberflächen der Haltedorne 10,10' angebracht werden, die sich koaxial zur Halteachse 40 erstrecken. Derartige Einfräsungen können z.B. Luft zu- oder abführen und damit das Einschieben oder Herausziehen der Haltedorne 10,10' erleichtern.

Vorzugsweise umfassen die Haltedorne 10,10' selbst und/oder die entsprechenden komplementären Vertiefungen 12,12' Entlüftungslöcher bzw. Belüftungslöcher, damit sich beim Einschieben oder Herausziehen der Haltedorne 10,10' kein Unteroder Überdruck in den komplementären Vertiefungen 12,12' bilden kann.

Die Figur 8 zeigt das Aufnehmen und Absetzen der austauschbaren Greiferfinger 2,2' aus bzw. in der Kulisse 28 einer Halterung 26. Vorzugsweise umfasst die Kulisse 28 der Halterung 26 zur Aufnahme von durch die Greiferzange 1 abgegebenen Greiferfingern 2.2' Haltestifte 42,42', die in entsprechende Haltesitze 43,43' in den Fingerbasen 11,11' formschlüssig eintauchen und die so abgesetzten Greiferfinger 2.2' sicher an der Kulisse halten. Vorzugsweise steht die Halterung 26 auf einer Arbeitsfläche einer robotisierten Laboranlage 39 bzw. eines sogenannten "Robotic Sample Processors", wie beispielsweise die GENESIS Freedom^{®} Workstation oder die Freedom EVO^{®} Plattform (beide erhältlich durch die Tecan Trading AG, 8708 Männedorf, Switzerland).

In Fig. 8A nehmen die Haltedorne 10,10' der Greiferzange 1 eine Einfahrposition ein und stehen den komplementären Vertiefungen 12,12' der Fingerbasen 11,11' der beiden Greiferfinger 2,2' gerade gegenüber.

In Fig.8B greifen die Haltedorne 10,10' der Greiferzange 1 in die komplementären Vertiefungen 12,12' der Fingerbasen 11,11' der beiden Greiferfinger 2,2' ein und erreichen ihre Anschlagsposition 15,15' an den jeweiligen Greiferbacken 3,3'. Die aufgenommenen Greiferfinger 2,2' sind mit der Greiferzange 1 von der Halterung 26 abgehoben.

Vorzugsweise befindet sich eine oder mehrere Halterung(en) 26 in einer speziell dafür vorgesehenen Region der robotisierten Laboranlage 39. Diese Region kann sich sowohl auf einer Arbeitsfläche der Laboranlage 39 oder auch neben, über oder unter der Tischebene dieser Laboranlage 39 befinden. In mehreren Halterungen 26 können unterschiedlich ausgebildete Paare von Greiferfingern 2,2' für den Roboterarm 35' der robotisierten Laboranlage 39 bereitgestellt werden. Jedes Greiferfinger-Paar kann speziell ausgebildet und individuell zum Erfassen bzw. Manipulieren von ausgewählten Gefässen, wie Probenröhrchen, Flüssigkeitsbehältern, Standard-Mikroplatten etc. geeignet sein. Das Ausbilden eines Greiferfinger-Paars zum Erfassen von unterschiedlichen Gegenständen ist ebenfalls denkbar und erwünscht.

Die Figur 9 zeigt zwei erfindungsgemässe Ausführungsformen der efindungsgemässen Greiferzange / Greiferfinger-Kombination bezüglich der Anordnung der Haltedorne, der entsprechenden Fingerbasis- und Kulissen-Ausbildung sowie des dadurch bedingten Aufnahme- und Abgabe-Verfahrens für die austauschbaren Greiferfinger.

In Fig. 9A ist die erste Ausführungsform mit in Richtung der X-Achse bzw. der ersten Achse 4 ausgerichteten Haltedornen 10,10' gezeigt. Die oben dargestellten Haltedorne 10,10' und die Führungsstifte 31,31' sind bevorzugt mit Presssitz an den zweiten Backenflanschen 6,6' befestigt. Die Halteachse 40 ist hier identisch mit der X-Achse.

In der Mitte ist ein Teil einer entsprechenden Fingerbasis 11' mit deren komplementärer Vertiefung 12' dargestellt, wobei sich diese komplementäre Vertiefung 12' mit ihrer Halteachse 40 in Richtung der X-Achse bzw. der ersten Achse 4 erstreckt. Zudem weist diese hier dargestellte Fingerbasis 11,11' vertikale Haltesitze 43,43' auf, wobei nur einer dieser Haltesitze gezeigt ist.

Unten ist ein Teil einer entsprechenden Kulisse 28 mit zwei vertikal aufragenden Haltestiften 42,42' dargestellt, welche formschlüssig in die vertikalen Haltesitze 43,43' der jeweiligen Fingerbasis 11,11' passen.

Die erste Ausführungsform der Anordnung der Haltedorne 10,10' und die hier dargestellte Anordnung der Haltestifte/Haltesitze ermöglicht ein erstes Verfahren zum robotisierten Aufnehmen von zwei Greiferfingern 2,2' mit einer Greiferzangen 1 / Greiferfinger 2,2' - Kombination, wobei dieses Verfahren die folgenden Schritte umfasst:
(a) Bereitstellen von zwei Greiferfingern 2,2' mit einer Halterung 26, wobei diese Greiferfinger 2,2' so zu einander ausgerichtet und der Greiferzange 1 präsentiert werden, dass mit der Greiferzange 1 die Greiferbacken 3,3' in eine Einfahrposition 27 gebracht werden können;
(b) Bewegen der Greiferbacken 3,3' der Greiferzange 1 in die Einfahrposition 27, in welcher die Haltedorne 10,10' der Greiferzange 1 den komplementären Vertiefungen 12,12' der Fingerbasen 11,11' der beiden Greiferfinger 2,2' gerade gegenüberstehen;
(c) Eingreifen der Haltedorne 10,10' der Greiferzange 1 in die komplementären Vertiefungen 12,12' der Fingerbasen 11,11' der beiden Greiferfinger 2,2' bis die Greiferfinger 2,2' ihre Anschlagsposition 15,15' an den jeweiligen Greiferbacken 3,3' erreichen; und
(d) Ausfahren der mit der Greiferzange 1 aufgenommenen Greiferfinger 2,2' aus der Halterung 26.

Vorzugsweise wird hier das Eingreifen der Haltedorne 10,10' in Schritt (c) durch ein horizontales Zusammenziehen der beiden Greiferbacken 3,3' in Richtung der ersten Achse 4 bewirkt und beim Ausfahren der Greiferfinger 2,2' aus der Halterung 26 wird die Greiferzange 1 gegenüber der Halterung 26 vertikal abgehoben.

In Fig. 9B ist die zweite Ausführungsform mit parallel zueinander und rechtwinklig zur Richtung der X-Achse bzw. der ersten Achse 4 ausgerichteten Haltedornen 10,10' gezeigt. Die Haltedorne 10,10' und die Führungsstifte 31,31' sind bevorzugt mit Presssitz an den zweiten Backenflanschen 6,6' befestigt. Die Halteachse 40 ist hier identisch mit der Y-Achse.

In der Mitte ist ein Teil einer entsprechenden Fingerbasis 11' mit deren komplementärer Vertiefung 12' dargestellt, wobei sich diese komplementäre Vertiefung 12' mit ihrer Halteachse 40 in Richtung der Y-Achse bzw. rechtwinklig zur ersten Achse 4 erstreckt. Zudem weist diese hier dargestellte Fingerbasis 11,11' vertikale Haltesitze 43,43' auf, wobei nur einer dieser Haltesitze gezeigt ist.

Unten ist ein Teil einer entsprechenden Kulisse 28 mit zwei vertikal aufragenden Haltestiften 42,42' dargestellt, welche formschlüssig in die vertikalen Haltesitze 43,43' der jeweiligen Fingerbasis 11,11' passen.
Vorzugsweise wird hier das Eingreifen der Haltedorne 10,10' in Schritt (c) durch ein horizontales Vorschieben der beiden Greiferbacken 3,3' rechtwinklig zur Richtung der ersten Achse 4 bewirkt und beim Ausfahren der Greiferfinger 2,2' aus der Halterung 26 wird die Greiferzange 1 gegenüber der Halterung 26 vertikal abgehoben. Bevorzugt ist, dass die beiden Greiferfinger 2,2' gemeinsam und simultan von der Kulisse 28 abgezogen werden können.

Bei allen diesen Verfahren zum robotisierten oder auch manuellen Aufnehmen von zwei Greiferfingern wird bevorzugt, dass die zwei Greiferfinger 2,2' währen des Ausführens des Schritts (c) in einer Kulisse 28 der Halterung 26 so gehalten werden, dass die Greiferfinger 2,2' während des Eingreifens der Haltedorne 10,10' der Greiferzange 1 in die komplementären Vertiefungen 12,12' der Fingerbasen 11,11' der beiden Greiferfinger 2,2' Zentrier-Bewegungen ausführen können.

Speziell bevorzugt weisen die Haltedorne 10,10' neben dem Haltekonus 67,67' auch einen Zentrierkonus 65,65' auf, der in der Einführrichtung in die komplementären Vertiefungen 12,12' der Fingerbasen 11,11' dem Haltekonus 67,67' vorangeht (vgl. Fig. 1, 4, 6 und 9). Diese Zentrierkonen 65,65' erleichtern das Einführen der Haltedorne 10,10' in die komplementären Vertiefungen 12,12' und erlauben das gegenseitige Präsentieren der Haltedorne 10,10' und komplementären Vertiefungen 12,12' mit wesentlich grösserer geometrischer Toleranz und grosszügigeren Zentrier-Bewegungen.

Beim Einsatz von Federhaltemittel 22,22';23,23' wird bevorzugt, dass die zwei Greiferfinger 2,2' währen des Ausführens des Schrittes (c) in einer Kulisse 28 der Halterung 26 so gehalten werden, dass mit dem Eingreifen der Haltedorne 10,10' der Greiferzange 1 in die komplementären Vertiefungen 12,12' der Fingerbasen 11,11' der beiden Greiferfinger 2,2' eine durch die ersten und zweiten Federhaltemittel 22,22';23,23' bewirkte Federkraft überwunden wird, ohne dass die Greiferfinger 2,2' ausweichen.

Die zwei offenbarten erfindungsgemässen Ausführungsformen der Anordnung der Haltedorne 10,10' und die oben dargestellten Anordnungen der Haltestifte/Haltesitze ermöglichen ein zweites Verfahren zum robotisierten oder auch manuellen Abgeben von zwei Greiferfingern 2,2' mit einer Greiferzangen 1 / Greiferfinger 2,2' - Kombination, wobei dieses Verfahren die folgenden Schritte umfasst:
(a) Absenken der mit der Greiferzange 1 aufgenommenen zwei Greiferfinger 2,2' gegen eine Halterung 26 mit einer Kulisse 28 und Bewegen der Greiferzange 1 bis Haltestifte 42,42' der Kulisse 28 in entsprechende Haltesitze 43,43' der Fingerbasen 11,11' eingreifen und bis die Greiferfinger 2,2' der Greiferzange 1 eine Endposition einnehmen; und
(b) Ausfahren der Haltedorne 10,10' der Greiferzange 1 aus den komplementären Vertiefungen 12,12' der Fingerbasen 11,11' der beiden Greiferfinger 2,2' bis die Haltedorne 10,10' der Greiferzange 1 aus den komplementären Vertiefungen 12,12' der Fingerbasis 11,11' der beiden Greiferfinger 2,2' austreten.

Bevorzugt wird, dass das Bewegen der Greiferzange 1 in Schritt (a) erfolgt, bis Haltestifte 42,42' der Kulisse 28 in entsprechende Haltesitze 43,43' der Fingerbasen 11,11' eingreifen.

Bei der Verwendung einer Greiferzange 1 gemäss der ersten Ausführungsform mit in Richtung der X-Achse bzw. der ersten Achse 4 ausgerichteten Haltedornen 10,10' wird bevorzugt, dass das Ausfahren der Haltedorne 10,10' in Schritt (b) durch ein horizontales Auseinanderbewegen der beiden Greiferbacken 3,3' in Richtung der ersten Achse 4 bewirkt wird.

Bei der Verwendung einer Greiferzange 1 gemäss der zweiten Ausführungsform mit parallel zueinander und rechtwinklig zur Richtung der X-Achse bzw. der ersten Achse 4 ausgerichteten Haltedornen 10,10' wird bevorzugt, dass das Ausfahren der Haltedorne 10,10' in Schritt (b) durch ein horizontales Rückwärtsbewegen der beiden Greiferbacken 3,3' in senkrechter Richtung zur ersten Achse 4 bewirkt wird.

Bei allen diesen Verfahren zum robotisierten oder auch manuellen Abgeben von zwei Greiferfingern wird bevorzugt, dass die zwei Greiferfinger 2,2' währen des Ausführens des Schritts (b) in einer Kulisse 28 der Halterung 26 so gehalten werden, dass mit dem Ausfahren der Haltedorne 10,10' der Greiferzange 1 aus den komplementären Vertiefungen 12,12' der Fingerbasen 11,11' der beiden Greiferfinger 2,2' eine durch die ersten und zweiten Federhaltemittel 22,22';23,23' bewirkte Federkraft oder eine durch die als erste und zweite Magnetmittel ausgebildeten Haltemittel 13,13'; 14,14' bewirkte magnetische Anziehungskraft überwunden wird, ohne dass die Greiferfinger 2,2' ausweichen.

An der Stelle eines Roboters 35 können auch andere geeignete Mittel zum Aufnehmen oder Abgeben von zwei Greiferfingern 2,2' mit der erfindungsgemässen Greiferzange 1 verwendet werden. Ein manuelles Aufnehmen und/oder Abgeben der Greiferfinger 2,2' ist ebenfalls vorgesehen.

Diese beiden eben beschriebenen Verfahren können dazu verwendet werden die zwei Greiferfinger 2,2' einer Greiferzange 1 einer robotisierten Laboranlage 39 robotisiert bzw. automatisch auszuwechseln.

Gleiche Bezugszeichen beziehen sich auf entsprechende Merkmale auch wenn diese nicht in jedem Fall ausführlich beschieben sind. Beliebige Kombination der beschriebenen und/oder gezeigten Ausführungsformen und Varianten gehören zum Umfang der vorliegenden Erfindung.

Vorzugsweise sind die Haltedorne als Haltekonus ausgebildet, wobei auch Kombinationen von Konus- und Zylinderformen bevorzugt sind. Diese Formen sind dazu ausgebildet, in entsprechende komplementäre Vertiefungen an den Greiferfingern einzugreifen. Speziell bevorzugt sind konusförmige Haltedorne die in komplementäre, konusförmigen Vertiefungen an den Greiferfingern eingreifen. Die Anbringungsorte der Haltedorne 10,10' und der komplementären Vertiefungen 12,12' können auch vertauscht sein, so dass sich die Haltedorne an den Greiferfingern befinden und die konusförmigen Vertiefungen in oder an den ersten Backenflanschen 5,5' bzw. in oder an den zweiten Backenflanschen 6,6' angeordnet sind.

Allgemein kann ein Haltekonus 67,67' auch mit dem Synonym "Tragkonus" bezeichnet werden, weil der Haltekonus 67,67' oder Tragkonus im Wesentlichen das Gewicht desjenigen Greiferfingers 2,2' trägt, in dessen komplementäre Vertiefung 12,12' der Haltekonus 67,67' eingreift. Zum Gewicht des Greiferfingers 2,2' kommt allenfalls noch etwa das halbe Gewicht der mit dem Parallel-Greifer aufzunehmenden und zu transportierenden unterschiedlichen Objekte bzw. Gefässe oder Laborartikel, wie z.B. Probenröhrchen, Mikroplatten oder Mikroröhrchen hinzu.

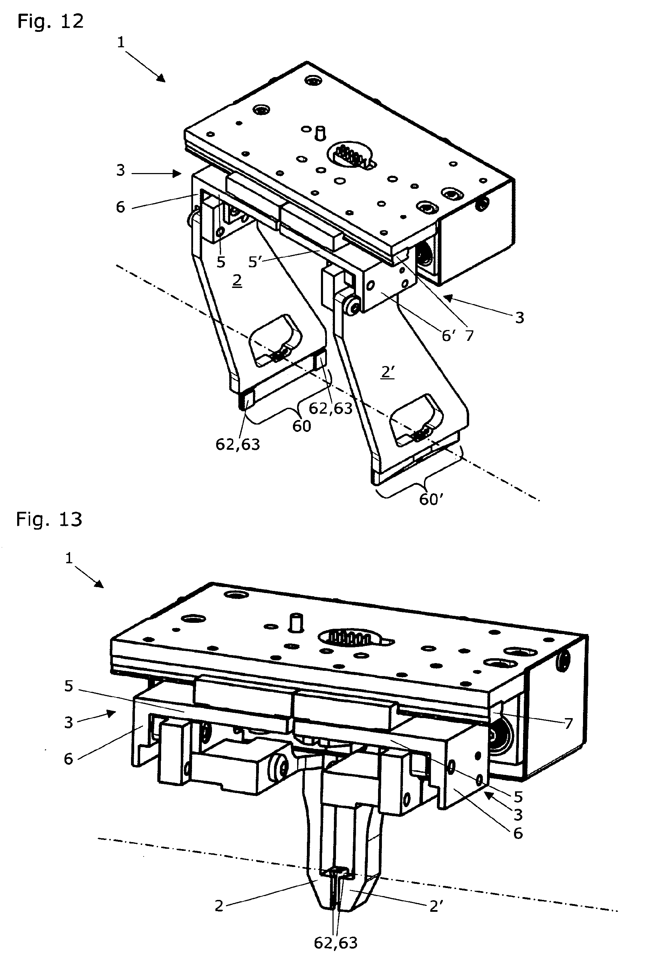

Die Figur 12 zeigt ein Beispiel eines erfindungsgemässen Parallelgreifers mit Greiferfingern zum vertikalen Erfassen von Mikroplatten. Die gleichen Bezugszeichen wie in den Figuren 1 bis 9 bezeichnen hier gleiche oder zumindest entsprechende Merkmale. Die Greiferzange 1 mit den beiden Greiferfinger 2,2' ist so ausgebildet, dass die Greiferfinger 2,2' im Wesentlichen symmetrisch zu einer Achse (vgl. strichpunktierte Linie) ausgerichtet sind, die parallel zur X-Achse (vgl. Fig. 1) und auch parallel zur ersten Achse 4 verläuft. Beide Greiferfinger 2,2' umfassen vorzugsweise an ihrem unteren Ende einen beweglichen Abschnitt 60,60' mit zwei Kontaktstellen 62,62' mit Gummipuffern 63,63' zum Beaufschlagen von Seitenflächen einer aufzunehmenden Mikroplatte.

Fig. 13 ein Beispiel eines erfindungsgemässen Parallelgreifers mit Greiferfingern zum vertikalen Erfassen von Probenröhrchen. Als Probenröhrchen werden z.B. Glasröhrchen mit Blutproben bezeichnet. Die gleichen Bezugszeichen wie in den Figuren 1 bis 9 bezeichnen hier gleiche oder zumindest entsprechende Merkmale. Die Greiferzange 1 mit den beiden Greiferfinger 2,2' ist so ausgebildet, dass die Greiferfinger 2,2' im Wesentlichen symmetrisch zu einer Achse (vgl. strichpunktierte Linie) ausgerichtet sind, die parallel zur X-Achse (vgl. Fig. 1) und auch parallel zur ersten Achse 4 verläuft. Beide Greiferfinger 2,2' umfassen vorzugsweise an ihrem unteren Ende zwei Kontaktstellen 62,62' mit Gummipuffern 63,63' zum Beaufschlagen von Seitenflächen eines aufzunehmenden Probenröhrchens. Vorzugsweise sind die beiden Gummipuffer 63,63' bei jedem Greiferfinger 2,2' wie gezeigt in einem Winkel zueinander angeordnet.

Jeder Haltekonus 67,67' bzw. "Tragkonus" umfasst eine Halteachse 40 (vgl. Fig. 7 und 9), die horizontal ausgerichtet ist. Als eigentliche Tragfläche des Haltekonus 67,67' bzw. "Tragkonus" kann somit die Hälfte der entsprechenden Konusfläche betrachtet werden, die oberhalb einer durch die Halteachse 40 bestimmten horizontalen Ebene liegt. Diese Tragfläche weist gerade wegen der Konusform keine Flächenabschnitte auf, die horizontal angeordnet sind; mit anderen Worten, alle Teile der Tragfläche eines erfindungsgemässen Haltekonus 67,67' bzw. "Tragkonus" sind gegenüber der Horizontalen geneigt. Es wäre deshalb eigentlich zu erwarten, dass die Greiferfinger 2,2' - seien sie nun belastet oder unbelastet - spontan von diesen Haltekonen 10,10' bzw. "Tragkonen" rutschen würden.

Aufgenommene Greiferfinger 2,2' rutschen jedoch während des Verfahrens des den unbelasteten Parallel-Greifer tragenden und dabei möglicherweise Vibrationen erzeugenden Roboterarms 35' nicht vom Haltekonus 67,67' oder Tragkonus ab, weil diese durch Haltemittel 13,13'; 14,14', die als Dauermagnete und/oder Federhaltemittel ausgebildet sind, in ihrer Anschlagposition 15,15' gehalten werden. Erstaunlicherweise halten die Greiferfinger 2,2' auch ohne die Zuhilfenahme von Haltemitteln 13,13',14,14' (wie Magnete oder Federn) ihre Anschlagposition 15,15' ein:
- wenn sich der Parallel-Greifer im unbelasteten Zustand befindet (also kein Objekt zwischen den beiden Greiferfingern 2,2' haltend), und wenn der den Parallel-Greifer tragende Roboterarms 35' sich in einem stationären, unbewegten Zustand befindet; oder
- wenn sich der Parallel-Greifer im belasteten Zustand befindet (also ein Objekt zwischen den beiden Greiferfingern 2,2' haltend), und wenn der den ParallelGreifer tragende Roboterarms 35' sich in einem stationären, unbewegten Zustand befindet; oder
- wenn sich der Parallel-Greifer im belasteten Zustand befindet (also ein Objekt zwischen den beiden Greiferfingern 2,2' haltend), und wenn der den ParallelGreifer tragende Roboterarms 35' bewegt wird,
weil die Greiferfinger 2,2' durch die spezielle Geometrie des jeweiligen Haltekonus 67,67' und der entsprechenden komplementären Vertiefung 12,12' gehalten werden.

Selbst wenn die Greiferfinger 2,2' einseitig ausladend ausgebildet sind (vgl. Fig. 2A, 2B, 2C, 3) werden sie in ihrer Anschlagposition 15,15' gehalten und können nicht um die Halteachse 40 abkippen, weil die Haltedorne 10,10' und komplementären Vertiefungen 12,12' in Wirkkombination mit Stabilisierungsmitteln dies verhindern. Diese Stabilisierungsmittel oder Kippsicherungen können wie schon beschrieben als Führungsstifte 31,31' und entsprechende Führungssitze 32,32', als Anschlagsflächen 17,17';19,19' der Backenflansche 6,6' und entsprechende Gegenflächen 16,16';18,18', oder als Haltedorne 10,10' und komplementäre Vertiefungen 12,12' mit einem von einer Kreisform abweichenden Querschnitt ausgebildet sein.

Zudem können die Greiferfinger 2,2' nicht um eine gedachte Achse abkippen, die rechtwinklig zu der jeweiligen Halteachse 40 verläuft, weil dies die spezielle Form des Haltekonus 67,67' bzw. "Tragkonus" verhindert. Diese Form ist dadurch gekennzeichnet, dass die Länge der beiden Haltekonen 10,10' mindestens einen Drittel ihres grössten Durchmessers beträgt, und dass ihr kleinster Durchmesser höchstens 90% des grössten Konus-Durchmessers beträgt.

Speziell bevorzugt wird, dass die beiden Konusdorne 10,10' je zwei aufeinander folgende Konusabschnitte umfassen, die ein Längenverhältnis von 22/3 und eine Nennweitenreduktion im Verhältnis von 5/3 und 3/1 aufweisen. Ganz speziell bevorzugt für die Ausbildung der Haltedorne als rotationssymmetrische Konusdorne 10,10' ist ein Kegelwinkel a, der 11.5° beträgt, wobei der Kegel eine Länge von 11 mm aufweist.

**Bezugszeichenliste**

| | | | |
|---|---|---|---|
| 1 | Greiferzange | 31,31' | Führungsstift |
| 2,2' | Greiferfinger | 32,32' | Führungssitz |
| 3,3' | Greiferbacken | 33,33' | Einlaufkonen von 31,31' |
| 4 | erste Achse | 34,34' | Einlaufkonen von 32,32' |
| 5,5' | erster Backenflansch | 35 | Roboter |
| 6,6' | zweiter Backenflansch | 35' | Roboterarm |
| 7 | Linearführung | 36 | Steuerung |
| 8 | Antrieb | 37 | Getriebe |
| 9 | Zahnriemen | 38 | Auswerteeinheit |
| 9' | Zahnrad | 39 | robotisierte Laboranlage |
| 10,10' | Haltedorn | 40 | Halteachse |
| 11,11' | Fingerbasis | 41,41' | Ausnehmung |
| 12,12' | komplementäre Vertiefung | 42,42' | Haltestift |
| 13,13' | erste Haltemittel | 43,43' | Haltesitz |
| 14,14' | zweite Haltemittel | 44 | Solenoidbremse |
| 15,15' | Anschlagsposition | 51 | Zangengehäuse |
| 16,16' | erste Gegenfläche | 52 | Drehachse |
| 17,17' | erste Anschlagsfläche | 53 | Greiferbolzen |
| 18,18' | zweite Gegenfläche | 54,54' | Zahnrad |
| 19,19' | zweite Anschlagsfläche | 55,55' | Schieber |
| 20,20' | Magnetposition | 56,56' | Greiferfinger (SdT) |
| 21,21' | Gegenpositionen | 57,57' | Flanke |
| 22,22' | erste Federhaltemittel | 58,58' | Zahnriemen |
| 23,23' | zweite Federhaltemittel | 59,59' | Zahnstange |
| 24,24' | Vertiefung(en) | 60,60' | beweglicher Abschnitt |
| 25,25' | federnd gelagerter Körper | 61,61' | Gelenk |
| 26 | Halterung | 62,62' | Kontaktstellen |
| 27 | Einfahrposition | 63,63' | Gummipuffer |
| 28 | Kulisse | 65,65' | Zentrierkonus |
| 28' | Variante von 28 | 66,66' | zylinderförmiger Abschnitt |
| 29,29' | Kontakteinheit | 67,67' | Haltekonus |
| 30,30' | Identifikationseinheit | | |

## Patentansprüche

1. Greiferzange (1) mit austauschbaren Greiferfingern (2,2') zum Ergreifen und Absetzen von Objekten, wobei die Greiferzange (1) zwei Greiferbacken (3,3') umfasst, die je einen zu einer ersten Achse (4) parallelen ersten Backenflansch (5,5') umfassen, wobei diese beiden Greiferbacken (3,3') mit ihrem jeweils ersten Backenflansch (5,5') an zumindest einer Linearführung (7) beweglich befestigt und entlang dieser zumindest einen Linearführung (7) mittels zumindest eines Antriebs (8) in Richtung der ersten Achse (4) gegen einander und voneinander weg bewegbar ausgebildet sind, **dadurch gekennzeichnet, dass** jeder der beiden Greiferbacken (3,3') einen Haltedorn (10,10') mit einem Haltekonus (67,67') und mit einer Halteachse (40) umfasst, wobei jeder der beiden Greiferfinger (2,2') reversibel in je einen der Greiferbacken (3,3') der Greiferzange (1) einsetzbar ausgebildet ist, indem er eine Fingerbasis (11,11') umfasst, die eine zum jeweils entsprechenden Haltekonus (67,67') des Haltedorns (10,10') der Greiferzange (1) komplementäre Vertiefung (12,12') aufweist, und wobei der Haltekonus (67,67') dadurch definiert ist, dass seine Länge mindestens einen Drittel seines grössten Durchmessers beträgt, und dass sein kleinster Durchmesser höchstens 90% des grössten Konus-Durchmessers beträgt;
**dass** die beiden Greiferbacken (3,3') und die Fingerbasen (11,11') der beiden Greiferfinger (2,2') Haltemittel (13,13'; 14,14') umfassen, welche die Greiferfinger (2,2') in einer Anschlagsposition (15,15') am jeweiligen Greiferbacken (3,3') halten;
**und dass** die beiden Greiferbacken (3,3') und die Fingerbasen (11,11') der beiden Greiferfinger (2,2') Stabilisierungsmittel umfassen, die so ausgebildet sind, dass sie in Wirkkombination mit dem Haltekonus (67,67') ein Abkippen der Greiferfinger (2,2') um die Halteachse (40) verhindern.

2. Greiferzange (1) mit Greiferfingern (2,2') nach Anspruch 1, **dadurch gekennzeichnet, dass** die Haltedorne (10,10') neben dem Haltekonus (67,67') auch einen Zentrierkonus (65,65') aufweisen, der in einer Einführrichtung in die komplementären Vertiefungen (12,12') der Fingerbasen (11,11') dem Haltekonus (67,67') vorangeht.

3. Greiferzange (1) mit Greiferfingern (2,2') nach Anspruch 1 oder 2, **dadurch gekennzeichnet, dass** die Haltedorne (10,10') zudem zumindest einen zylinderförmigen Abschnitt (66,66') umfassen.

4. Greiferzange (1) mit Greiferfingern (2,2') nach einem der vorhergehenden Ansprüche, **dadurch gekennzeichnet, dass** die beiden Greiferbacken (3,3') mit ihrem jeweils ersten Backenflansch (5,5') an einer gemeinsamen Linearführung (7) beweglich befestigt und spiegelsymmetrisch synchron entlang dieser gemeinsamen Linearführung (7) mittels eines gemeinsamen, motorisch angetrieben Zahnriemens (9) in Richtung der ersten Achse (4) gegen einander und voneinander weg bewegbar ausgebildet sind.

5. Greiferzange (1) mit Greiferfingern (2,2') nach einem der Ansprüche 1 bis 3, **dadurch gekennzeichnet, dass** die beiden Greiferbacken (3,3') mit ihrem jeweils ersten Backenflansch (5,5') an einer gemeinsamen Linearführung (7) beweglich befestigt und spiegelsymmetrisch synchron entlang dieser gemeinsamen Linearführung (7) mittels eines gemeinsamen, motorisch angetrieben Zahnrads (54) und zwei Zahnriemen (58,58') oder zwei Zahnstangen (59,59') in Richtung der ersten Achse (4) gegen einander und voneinander weg bewegbar ausgebildet sind.

6. Greiferzange (1) mit Greiferfingern (2,2') nach einem der vorhergehenden Ansprüche, **dadurch gekennzeichnet, dass** jeder der beiden Greiferbacken (3,3') einen zur ersten Achse (4) senkrechten und mit je einem ersten Backenflansch (5,5') fest verbundenen zweiten Backenflansch (6,6') umfasst, wobei die Haltedorne (10,10') an je einem dieser zweiten Backenflansche (6,6') so befestigt und gegen den jeweils anderen zweiten Haltedorn (10'10) gerichtet sind, dass ihre Halteachse (40) parallel zur ersten Achse (4) angeordnet ist.

7. Greiferzange (1) mit Greiferfingern (2,2') nach Anspruch 6, **dadurch gekennzeichnet, dass** die beiden Haltedorne (10,10') konzentrisch auf einer gemeinsamen ersten Achse (4) gegen einander ausgerichtet sind.

8. Greiferzange (1) mit Greiferfingern (2,2') nach einem der Ansprüche 1 bis 5, **dadurch gekennzeichnet, dass** jeder der beiden Greiferbacken (3,3') einen zur ersten Achse (4) parallelen und rechtwinklig mit je einem ersten Backenflansch (5,5') fest verbundenen zweiten Backenflansch (6,6') umfasst, wobei die Haltedorne (10,10') an je einem dieser zweiten Backenflansche (6,6') so befestigt und parallel zu dem jeweils anderen Haltedorn (10'10) gerichtet sind, dass ihre Halteachse (40) rechtwinklig zur ersten Achse (4) und parallel zum jeweiligen ersten Backenflansch (5,5') angeordnet ist.

9. Greiferzange (1) mit Greiferfingern (2,2') nach Anspruch 6 oder 8, **dadurch gekennzeichnet, dass** die Haltemittel (13,13';14,14'), zum Halten von zwei Greiferfingern (2,2') in einer Anschlagsposition (15,15') an den jeweiligen Greiferbacken (3,3'), als an den ersten Backenflanschen (5,5') angeordnete erste Federhaltemittel (22,22) und als an entsprechend platzierbaren Positionen der zwei Greiferfinger (2,2') angeordnete zweite Federhaltemittel (23,23') ausgebildet sind.

10. Greiferzange (1) mit Greiferfingern (2,2') nach einem der Ansprüche 6 oder 8, **dadurch gekennzeichnet, dass** erste Haltemittel (13,13'), zum Halten von zwei Greiferfingern (2,2') in einer Anschlagsposition (15,15') an den jeweiligen Greiferbacken (3,3'), als erste Magnetmittel ausgebildet sind, die an Magnetpositionen (20,20') der ersten Backenflansche (5,5') oder der zweiten Backenflansche (6,6') angeordnet sind, **und dass** zweite Haltemittel (14,14'), zum Halten der zwei Greiferfinger (2,2') in einer Anschlagsposition (15,15') an den jeweiligen Greiferbacken (3,3'), als zweite Magnetmittel ausgebildet sind, die an entsprechend platzierbaren Gegenpositionen (21,21') der Greiferfinger (2,2') angeordnet sind.

11. Greiferzange (1) mit Greiferfingern (2,2') nach einem der vorhergehenden Ansprüche, **dadurch gekennzeichnet, dass** die ersten Backenflansche (5,5') oder die zweiten Backenflansche (6,6') Führungsstifte (31,31') umfassen, die parallel zu den Haltedornen (10,10') ausgerichtet und in einem Abstand zu diesen Haltedornen (10,10') angeordnet sind, wobei die Fingerbasen (11,11') der Greiferfinger (2,2') Führungssitze (32,32') umfassen, die zum Halten der Führungsstifte (31,31') in der Anschlagsposition (15,15') der Greiferfinger (2,2') ausgebildet sind, und wobei die Führungsstifte (31,31') und Führungssitze (32,32') als Stabilisierungsmittel ausgebildet sind und in Wirkkombination mit den Haltedornen (10,10') und komplementären Vertiefungen (12,12') ein Abkippen der mit den Greiferbacken (3,3') aufgenommenen Greiferfinger (2,2') verhindern.

12. Greiferzange (1) mit Greiferfingern (2,2') nach einem der Ansprüche 1 bis 10, **dadurch gekennzeichnet, dass** die Fingerbasen (11,11') der Greiferfinger (2,2') Gegenflächen (16,16'; 18,18') umfassen, die in der Anschlagsposition (15,15') der Greiferfinger (2,2') Anschlagsflächen (17,17';19,19') der Backenflansche (6,6') beaufschlagen und als Stabilisierungsmittel ausgebildet sind und in Wirkkombination mit den Haltedornen (10,10') ein Abkippen der in die Greiferzange (1) eingesetzten Greiferfinger (2,2') verhindern.

13. Greiferzange (1) mit Greiferfingern (2,2') nach Anspruch 12, **dadurch gekennzeichnet, dass** die ersten Federhaltemittel (22,22') als eine oder mehrere Vertiefung(en) (24,24') in zweiten Anschlagsflächen (19,19') der ersten Backenflansche (5,5') oder zweiten Backenflansche (6,6') ausgebildet sind, und dass die zweiten Federhaltemittel (23,23') als in einer Ausnehmung (41,41') in der jeweils zweiten Gegenfläche (18,18') federnd gelagerte Körper (25,25') ausgebildet sind.

14. Greiferzange (1) mit Greiferfingern (2,2') nach einem der Ansprüche 1 bis 10, **dadurch gekennzeichnet, dass** die Haltedorne (10,10') der Greiferzange (1) und die komplementären Vertiefungen (12,12') jeder Fingerbasis (11,11') als Stabilisierungsmittel ausgebildet sind und einen entsprechenden von einer Kreisform abweichenden Querschnitt aufweisen, wodurch ein Abkippen der in die Greiferzange (1) eingesetzten Greiferfinger (2,2') in ihrer Anschlagsposition (15,15') verhindert wird.

15. Greiferzange (1) mit Greiferfingern (2,2') nach Anspruch 11 oder 14, **dadurch gekennzeichnet, dass** die ersten Federhaltemittel (22,22') als eine oder mehrere Vertiefung(en) (24,24') in den ersten Backenflanschen (5,5') oder in den zweiten Backenflanschen (6,6') ausgebildet sind, und dass die zweiten Federhaltemittel (23,23') als in einer Ausnehmung (41,41') in der jeweiligen Fingerbasis (11,11') federnd gelagerte Körper (25,25') ausgebildet sind.

16. Greiferzange (1) mit Greiferfingern (2,2') nach einem der Ansprüche 1 bis 13 oder 15, **dadurch gekennzeichnet, dass** die beiden Haltedorne (10,10') konusförmig ausgebildet sind, einen kreisförmigen Querschnitt und ein Verhältnis des grössten Kegel-Durchmessers zur Kegel-Länge aufweisen, das kleiner ist als 1:3, und besonders bevorzugt 1:5 ist.

17. Roboter (35) mit einer Greiferzangen (1) / Greiferfinger (2,2') - Kombination nach einem der vorhergehenden Ansprüche, wobei der Roboter (35) eine Steuerung (36) umfasst.

18. Roboter (35) nach Anspruch 17, **dadurch gekennzeichnet, dass** jeder der Greiferbacken (3,3') der Greiferzange (1) eine Kontakteinheit (29,29') umfasst, die mit einer Auswerteeinheit (38) der Steuerung (36) des Roboters (35) wirkverbunden ist, **und dass** jeder der in die Greiferzange (1) einsetzbaren Greiferfinger (2,2') eine Identifikationseinheit (30,30') umfasst, die in der Anschlagsposition (15,15') der Greiferfinger (2,2') mit der Kontakteinheit (29,29') in einem Lese-Kontakt steht, so dass mit der Auswerteeinheit (38) des Roboters (35) jeder Greiferfinger (2,2') identifizierbar ist.

19. Verfahren zum Aufnehmen von zwei Greiferfingern (2,2') mit einer Greiferzangen (1) / Greiferfinger (2,2') - Kombination gemäss einem der Ansprüche 1 bis 16, **dadurch gekennzeichnet, dass** dieses Verfahren die folgenden Schritte umfasst:
(a) Bereitstellen von zwei Greiferfingern (2,2') mit einer Halterung (26), wobei diese Greiferfinger (2,2') so zu einander ausgerichtet und der Greiferzange (1) präsentiert werden, dass mit der Greiferzange (1) die Greiferbacken (3,3') in eine Einfahrposition (27) gebracht werden können;
(b) Bewegen der Greiferbacken (3,3') der Greiferzange (1) in die Einfahrposition (27), in welcher die Haltedorne (10,10') der Greiferzange (1) den komplementären Vertiefungen (12,12') der Fingerbasen (11,11') der beiden Greiferfinger (2,2') gerade gegenüberstehen;
(c) Eingreifen der Haltedorne (10,10') der Greiferzange (1) in die komplementären Vertiefungen (12,12') der Fingerbasen (11,11') der beiden Greiferfinger (2,2') bis die Greiferfinger (2,2') ihre Anschlagsposition (15,15') an den jeweiligen Greiferbacken (3,3') erreichen; und
(d) Ausfahren der mit der Greiferzange (1) aufgenommenen Greiferfinger (2,2') aus der Halterung (26).

20. Verfahren nach Anspruch 19, **dadurch gekennzeichnet, dass** das Eingreifen der Haltedorne (10,10') in Schritt (c) durch ein horizontales Zusammenziehen der beiden Greiferbacken (3,3') in Richtung der ersten Achse (4) bewirkt wird.

21. Verfahren nach Anspruch 19, **dadurch gekennzeichnet, dass** das Eingreifen der Haltedorne (10,10') in Schritt (c) durch ein horizontales Vorwärtsbewegen der beiden Greiferbacken (3,3') in senkrechter Richtung zur ersten Achse (4) bewirkt wird.

22. Verfahren zum Abgeben von zwei Greiferfingern (2,2') mit einer Greiferzangen (1) / Greiferfinger (2,2') - Kombination gemäss einem der Ansprüche 1 bis 16, **dadurch gekennzeichnet, dass** dieses Verfahren die folgenden Schritte umfasst:
(a) Absenken der mit der Greiferzange (1) aufgenommenen zwei Greiferfinger (2,2') gegen eine Halterung (26) mit einer Kulisse (28) und Bewegen der Greiferzange (1) bis die Greiferfinger (2,2') der Greiferzange (1) eine Endposition einnehmen; und
(b) Ausfahren der Haltedorne (10,10') der Greiferzange (1) aus den komplementären Vertiefungen (12,12') der Fingerbasen (11,11') der beiden Greiferfinger (2,2') bis die Haltedorne (10,10') der Greiferzange (1) aus den komplementären Vertiefungen (12,12') der Fingerbasis (11,11') der beiden Greiferfinger (2,2') austreten.

23. Verfahren nach Anspruch 22, **dadurch gekennzeichnet, dass** das Bewegen der Greiferzange (1) in Schritt (a) erfolgt, bis Haltestifte (42,42') der Kulisse (28) in entsprechende Haltesitze (43,43') der Fingerbasen (11,11') eingreifen.

24. Verfahren nach Anspruch 22 oder 23, **dadurch gekennzeichnet, dass** das Ausfahren der Haltedorne (10,10') in Schritt (b) durch ein horizontales Auseinanderbewegen der beiden Greiferbacken (3,3') in Richtung der ersten Achse (4) bewirkt wird.

25. Verfahren nach Anspruch 22 oder 23, **dadurch gekennzeichnet, dass** das Ausfahren der Haltedorne (10,10') in Schritt (b) durch ein horizontales Rückwärtsbewegen der beiden Greiferbacken (3,3') in senkrechter Richtung zur ersten Achse (4) bewirkt wird.

26. Verwendung der Verfahren nach den Ansprüchen 19 und 22 zum robotisierten Auswechseln der zwei Greiferfinger (2,2') einer Greiferzange (1) einer robotisierten Laboranlage (39).

## Claims

1. Gripper clamp (1) having exchangeable gripper fingers (2,2') for grasping and depositing objects, wherein the gripper clamp (1) comprises two gripper jaws (3,3'), which each comprise one first jaw flange (5,5'), which is parallel to a first axis (4), wherein these two gripper jaws (3,3') are movably fastened using their respective first jaw flange (5,5') on at least one linear guide (7) and are implemented as movable along this at least one linear guide (7) by means of at least one drive (8) in the direction of the first axis (4) toward one another and away from one another, **characterized in that** each of the two gripper jaws (3,3') comprises a holding mandrel (10,10') having a holding cone (67,67') and having a holding axis (40), wherein each of the two gripper fingers (2,2') is implemented as reversibly insertable into one of the gripper jaws (3,3') of the gripper clamp (1) in each case, **in that** it comprises a finger base (11,11'), which has a depression (12,12') complementary to the respective corresponding holding cone (67,67') of the holding mandrel (10,10') of the gripper clamp (1), and wherein the holding cone (67,67') is defined **in that** its length is at least one-third of its greatest diameter, and its smallest diameter is at most 90% of the largest cone diameter,
**in that** the two gripper jaws (3,3') and the finger bases (11,11') of the two gripper fingers (2,2') comprise holding means (13,13'; 14,14'), which hold the gripper fingers (2,2') in a stop position (15,15') on the respective gripper jaw (3,3');
and **in that** the two gripper jaws (3,3') and the finger bases (11,11') of the two gripper fingers (2,2') comprise stabilization means, which are implemented such that, in operational combination with the holding cone (67,67'), they prevent tilting of the gripper fingers (2,2') about the holding axis (40).

2. Gripper clamp (1) having gripper fingers (2,2') according to Claim 1, **characterized in that** the holding mandrels (10,10') also have, in addition to the holding cone (67,67'), a centering cone (65,65'), which precedes the holding cone (67,67') in an insertion direction into the complementary depressions (12,12') of the finger bases (11,11').

3. Gripper clamp (1) having gripper fingers (2,2') according to Claim 1 or 2, **characterized in that** the holding mandrels (10,10') additionally comprise at least one cylindrical section (66,66').

4. Gripper clamp (1) having gripper fingers (2,2') according to one of the preceding claims, **characterized in that** the two gripper jaws (3,3') are movably fastened using their respective first jaw flange (5,5') on a shared linear guide (7) and are implemented as movable mirror-symmetrically and synchronously along this shared linear guide (7) by means of a shared, motor-driven toothed belt (9) in the direction of the first axis (4) toward one another and away from one another.

5. Gripper clamp (1) having gripper fingers (2,2') according to one of Claims 1 to 3, **characterized in that** the two gripper jaws (3,3') are movably fastened using their respective first jaw flange (5,5') on a shared linear guide (7) and are implemented as movable mirror-symmetrically and synchronously along this shared linear guide (7) by means of a shared, motor-driven toothed wheel (54) and two toothed belts (58,58') or two toothed racks (59,59') in the direction of the first axis (4) toward one another and away from one another.

6. Gripper clamp (1) having gripper fingers (2,2') according to one of the preceding claims, **characterized in that** each of the two gripper jaws (3,3') comprises a second jaw flange (6,6'), which is perpendicular to the first axis (4) and is fixedly connected in each case to one first jaw flange (5,5'), wherein the holding mandrels (10,10') are fastened on one of these second jaw flanges (6,6') and are oriented toward the respective other second holding mandrel (10,10') in each case such that their holding axis (40) is arranged parallel to the first axis (4).

7. Gripper clamp (1) having gripper fingers (2,2') according to Claim 6, **characterized in that** the two holding mandrels (10,10') are aligned concentrically to one another on a shared first axis (4).

8. Gripper clamp (1) having gripper fingers (2,2') according to one of Claims 1 to 5, **characterized in that** each of the two gripper jaws (3,3') comprises a second jaw flange (6,6'), which is parallel to the first axis (4) and is fixedly connected perpendicularly in each case to one first jaw flange (5,5'), wherein the holding mandrels (10,10') on each one of these second jaw flanges (6,6') are fastened and oriented in parallel to the respective other holding mandrel (10',10) such that their holding axis (40) is arranged perpendicularly to the first axis (4) and parallel to the respective first jaw flange (5,5').

9. Gripper clamp (1) having gripper fingers (2,2') according to Claim 6 or 8, **characterized in that** the holding means (13,13'; 14,14'), for holding two gripper fingers (2,2') in a stop position (15,15') on the respective gripper jaws (3,3'), are implemented as first spring holding means (22,22'), which are arranged on the first jaw flanges (5,5'), and as second spring holding means (23,23'), which are arranged on correspondingly placeable positions of the two gripper fingers (2,2').

10. Gripper clamp (1) having gripper fingers (2,2') according to one of the preceding claims, **characterized in that** first holding means (13,13'), for holding two gripper fingers (2,2') in a stop position (15,15') on the respective gripper jaws (3,3'), are implemented as first magnet means, which are arranged on magnet positions (20,20') of the first jaw flanges (5,5') or the second jaw flanges (6,6'), and **in that** second holding means (14,14'), for holding the second gripper fingers (2,2') in a stop position (15,15') on the respective gripper jaws (3,3'), are implemented as second magnet means, which are arranged on correspondingly placeable counter positions (21,21') of the gripper fingers (2,2').

11. Gripper clamp (1) having gripper fingers (2,2') according to one of the preceding claims, **characterized in that** the first jaw flanges (5,5') or the second jaw flanges (6,6') comprise guide pins (31,31'), which are aligned parallel to the holding mandrels (10,10') and are arranged at a distance to these holding mandrels (10,10'), wherein the finger bases (11,11') of the gripper fingers (2,2') comprise guide seats (32,32'), which are implemented to hold the guide pins (31,31') in the stop position (15,15') of the gripper fingers (2,2'), and wherein the guide pins (31,31') and guide seats (32,32') are implemented as stabilization means and, in operational combination with the holding mandrels (10,10') and complementary depressions (12,12'), prevent tilting of the gripper fingers (2,2') received by the gripper jaws (3,3').

12. Gripper clamp (1) having gripper fingers (2,2') according to one of Claims 1 to 10, **characterized in that** the finger bases (11,11') of the gripper fingers (2,2') comprise counter surfaces (16,16'; 18,18') which, in the stop position (15,15') of the gripper fingers (2,2'), are applied to stop surfaces (17,17'; 19,19') of the jaw flanges (6,6') and are implemented as stabilization means and, in operational combination with the holding mandrels (10,10'), prevent tilting of the gripper fingers (2,2') inserted into the gripper clamp (1).

13. Gripper clamp (1) having gripper fingers (2,2') according to Claim 12, **characterized in that** the first spring holding means (22,22') are implemented as one or more depression(s) (24,24') in second stop surfaces (19,19') of the first jaw flanges (5,5') or second jaw flanges (6,6') and that the second spring holding means (23,23') are implemented as spring-mounted bodies (25,25') in a recess (41,41') in the respective second counter surface (18,18').

14. Gripper clamp (1) having gripper fingers (2,2') according to one of Claims 1 to 10, **characterized in that** the holding mandrels (10,10') of the gripper clamp (1) and the complementary depressions (12,12') of each finger base (11,11') are implemented as stabilization means and have a corresponding cross-section, which deviates from a circular shape, whereby tilting of the gripper fingers (2,2'), which are inserted into the gripper clamp (1), in their stop position (15,15') is prevented.

15. Gripper clamp (1) having gripper fingers (2,2') according to Claim 11 or 14, **characterized in that** the first spring holding means (22,22') are implemented as one or more depression(s) (24,24') in the first jaw flanges (5,5') or in the second jaw flanges (6,6'), and that the second spring holding means (23,23') are implemented as spring-mounted bodies (25,25') in a recess (41,41') in the respective finger base (11,11').

16. Gripper clamp (1) having gripper fingers (2,2') according to one of Claims 1 to 13 or 15, **characterized in that** the two holding mandrels (10,10') are implemented as conical, have a circular cross-section and a ratio of the largest cone diameter to the cone length which is less than 1:3, and is preferably 1:5.

17. Robot (35) having a gripper clamp (1)/gripper finger (2,2') combination according to one of the preceding claims, wherein the robot (35) comprises a controller (36).

18. Robot (35) according to Claim 17, **characterized in that** each of the gripper jaws (3,3') of the gripper clamp (1) comprises a contact unit (29,29'), which is operationally connected to an analysis unit (38) of the controller (36) of the robot (35), and **in that** each gripper finger (2,2') that is insertable into the gripper clamp (1) comprises an identification unit (30,30'), which, in the stop position (15,15') of the gripper fingers (2,2'), is in a read contact with the contact unit (29,29'), so that every gripper finger (2,2') is identifiable using the analysis unit (38) of the robot (35).

19. Method for accommodating two gripper fingers (2,2') using a gripper clamp (1)/gripper finger (2,2') combination according to one of Claims 1 to 16, **characterized in that** this method comprises the following steps:
(a) providing two gripper fingers (2,2') with a mount (26), wherein these gripper fingers (2,2') are aligned to one another and presented to the gripper clamp (1) such that the gripper jaws (3,3') can be moved into a retraction position (27) using the gripper clamp (1);
(b) moving the gripper jaws (3,3') of the gripper clamp (1) into the retraction position (27), in which the holding mandrels (10,10') of the gripper clamp (1) are precisely opposite to the complementary depressions (12,12') of the finger bases (11,11') of the two gripper fingers (2,2');
(c) engaging the holding mandrels (10,10') of the gripper clamp (1) in the complementary depressions (12,12') of the finger bases (11,11') of the two gripper fingers (2,2') until the gripper fingers (2,2') reach their stop position (15,15') on the respective gripper jaws (3,3'); and
(d) extending the gripper fingers (2,2'), which are received using the gripper clamp (1), out of the mount (26).

20. Method according to Claim 19, **characterized in that** the engagement of the holding mandrels (10,10') in step (c) is caused by a horizontal drawing together of the two gripper jaws (3,3') in the direction of the first axis (4).

21. Method according to Claim 19, **characterized in that** the engagement of the holding mandrels (10,10') in step (c) is caused by a horizontal forward movement of the two gripper jaws (3,3') in perpendicular direction to the first axis (4).

22. Method for discharging two gripper fingers (2,2') using a gripper clamp (1)/gripper finger (2, 2') combination according to one of Claims 1 to 16, **characterized in that** this method comprises the following steps:
(a) lowering the two gripper fingers (2,2'), which are received using the gripper clamp (1), toward a mount (26) having a link (28) and moving the gripper clamp (1) until the gripper fingers (2,2') of the gripper clamp (1) occupy an end position; and
(b) extending the holding mandrels (10,10') of the gripper clamp (1) out of the complementary depressions (12,12') of the finger bases (11,11') of the two gripper fingers (2,2') until the holding mandrels (10,10') of the gripper clamp (1) exit out of the complementary depressions (12,12') of the finger bases (11,11') of the two gripper fingers (2,2').

23. Method according to Claim 22, **characterized in that** the movement of the gripper clamp (1) in step (a) occurs until holding pins (42,42') of the link (28) engage in corresponding holding seats (43,43') of the finger bases (11,11').

24. Method according to Claim 22 or 23, **characterized in that** the extension of the holding mandrels (10,10') in step (b) is caused by a horizontal moving apart of the two gripper jaws (3,3') in the direction of the first axis (4).

25. Method according to Claim 22 or 23, **characterized in that** the extension of the holding mandrels (10,10') in step (b) is caused by a horizontal reverse movement of the two gripper jaws (3,3') in perpendicular direction to the first axis (4).

26. Use of the method according to Claims 19 and 22 for the robotic exchange of the two gripper fingers (2,2') of a gripper clamp (1) of a robotic laboratory facility (39).

## Revendications

1. Pince de préhension (1) avec doigts de pince interchangeables (2,2') destinée à saisir et à déposer des objets, la pince de préhension (1) comprenant deux mâchoires (3,3') qui comprennent chacune une première bride de mâchoire (5,5') parallèle à un premier axe (4), ces deux mâchoires (3,3') étant fixées mobiles avec leur première bride de mâchoire (5,5') à au moins un guidage linéaire (7) et étant réalisées de façon à pouvoir être rapprochées ou écartées l'une de l'autre en direction du premier axe (4) le long de ce au moins un guidage linéaire (7) au moyen d'au moins un entraînement (8), **caractérisée en ce que** chacune des deux mâchoires (3,3') comprend une broche de retenue (10,10') avec un cône de retenue (67,67') et un axe de retenue (40), chacun des deux doigts de pince (2,2') étant réalisé de façon à pouvoir être utilisé de façon interchangeable dans l'une des mâchoires (3,3') de la pince de préhension (1) dans la mesure où il comprend une base de doigt (11,11') qui présente un évidement (12,12') complémentaire au cône de retenue correspondant (67,67') de la broche de retenue (10,10') de la pince de préhension (1), et le cône de retenue (67,67') étant ainsi défini de telle sorte que sa longueur est égale à au moins un tiers de son plus grand diamètre et que son plus petit diamètre est égal au maximum à 90 % du plus grand diamètre de cône,
**en ce que** les deux mâchoires (3,3') et les bases de doigt (11,11') des deux doigts de pince (2,2') comprennent des moyens de retenue (13,13'; 14,14'), lesquels maintiennent les doigts de pince (2,2') dans une position de butée (15, 15') sur le mâchoire (3,3') respective;
et **en ce que** les deux mâchoires (3,3') et les bases de doigt (11,11') des deux doigts de pince (2,2') comprennent des moyens stabilisateurs qui sont réalisés de telle façon, qu'en combinaison avec le cône de retenue (67,67'), ils empêchent les doigts de pince (2,2') de basculer autour de l'axe de retenue (40).

2. Pince de préhension (1) avec doigts de pince (2,2') selon la revendication 1, **caractérisée en ce que** les broches de retenue (10,10') présentent en plus du cône de retenue (67,67') également un cône de centrage (65,65') qui précède le cône de retenue (67,67') dans un sens d'insertion dans les évidements complémentaires (12,12') des bases de doigt (11,11').

3. Pince de préhension (1) avec doigts de pince (2, 2') selon la revendication 1 ou 2, **caractérisée en ce que** les broches de retenue (10, 10') comprennent en outre au moins une section cylindrique (66, 66').

4. Pince de préhension (1) avec doigts de pince (2,2') selon l'une des revendications précédentes, **caractérisée en ce que** les deux mâchoires (3,3') sont fixées, avec leur première bride de mâchoire (5,5') respective, de façon mobile sur un guidage linéaire commun (7) et **en ce qu'**elles sont réalisées de façon à pouvoir être écartées ou rapprochées l'une de l'autre en direction du premier axe (4) symétriquement de façon synchrone le long de ce guidage linéaire commun (7) au moyen d'une courroie dentée (9) motorisée commune.

5. Pince de préhension (1) avec doigts de pince (2,2') selon l'une des revendications 1 à 3, **caractérisée en ce que** les deux mâchoires (3,3') sont fixées, avec leur première bride de mâchoire (5,5') respective, de façon mobile sur un guidage linéaire commun (7) et **en ce qu'**elles sont réalisées de façon à pouvoir être écartées ou rapprochées l'une de l'autre en direction du premier axe (4) symétriquement de façon synchrone le long de ce guidage linéaire commun (7) au moyen d'une roue dentée (54) motorisée commune et de deux courroies dentées (58,58') ou de deux crémaillères (59,59').

6. Pince de préhension (1) avec doigts de pince (2,2') selon l'une des revendications précédentes, **caractérisée en ce que** chacune des deux mâchoires (3,3') comprend une deuxième bride de mâchoire (6,6') perpendiculaire au premier axe (4) et reliée fixement à la première bride de mâchoire (5,5'), les broches de retenue (10,10') étant ainsi fixées à l'une des ces deuxièmes brides de mâchoire (6,6') et orientées à l'opposé de l'autre deuxième broche de retenue (10,10') de sorte que leur axe de retenue (40) est agencé parallèlement au premier axe (4).

7. Pince de préhension (1) avec doigts de pince (2,2') selon la revendication 6, **caractérisée en ce que** les deux broches de retenue (10,10') sont alignées l'une en face de l'autre de façon concentrique sur un premier axe (4) commun.

8. Pince de préhension (1) avec doigts de pince (2,2') selon l'une des revendications 1 à 5, **caractérisée en ce que** chacune des deux mâchoires (3,3') comprend une deuxième bride de mâchoire (6,6') parallèle au premier axe (4) et reliée fixement perpendiculairement à une première bride de mâchoire (5,5'), les broches de retenue (10,10') étant fixées à l'une de ces deuxièmes brides de mâchoire (6,6') et étant orientées parallèlement à l'autre broche de retenue (10,10') de sorte que leur axe de retenue (40) est agencé perpendiculairement au premier axe (4) et parallèlement à la première bride de mâchoire (5,5') respective.

9. Pince de préhension (1) avec doigts de pince (2,2') selon la revendication 6 ou 8, **caractérisée en ce que** les moyens de retenue (13,13'; 14,14'), pour maintenir les deux doigts de pince (2,2') dans une position de butée (15,15') sur les mâchoires de préhension (3,3') respectives, sont réalisés sous la forme de premiers moyens de retenue élastiques (22,22') agencés sur les premières brides de mâchoire (5,5') et sous la forme de deuxièmes moyens de retenue élastiques (23,23') agencés à des positions correspondantes des deux doigts de pince (2,2').

10. Pince de préhension (1) avec doigts de pince (2,2') selon l'une des revendications 6 ou 8, **caractérisée en ce que** les premiers moyens de retenue (13,13'), pour maintenir les deux doigts de pince (2,2') dans une position de butée (15,15') sur les mâchoires (3,3') respectives, sont réalisés sous la forme de premiers moyens magnétiques qui sont agencés à des positions magnétiques (20,20') des premières brides de mâchoire (5,5') ou des deuxièmes brides de mâchoire (6,6'), et **en ce que** les deuxièmes moyens de retenue (14,14'), pour maintenir les deux doigts de pince (2,2') dans une position de butée (15,15') sur les mâchoires (3,3') respectives, sont réalisés sous la forme de deuxièmes moyens magnétiques qui sont agencés à des positions inverses correspondantes (21,21') des doigts de pince (2,2').

11. Pince de préhension (1) avec doigts de pince (2,2') selon l'une des revendications précédentes, **caractérisée en ce que** les premières brides de mâchoire (5,5') ou les deuxièmes brides de mâchoire (6,6') comprennent des broches de guidage (31,31') qui sont orientées parallèlement aux broches de retenue (10,10') et qui sont agencées à distance de ces broches de retenue (10,10'), les bases (11,11') des doigts de pince (2,2') comprenant des surfaces de guidage (32,32') qui sont conçues pour maintenir les broches de guidage (31,31') en position de butée (15,15') des doigts de pince (2,2'), les broches de guidage (31,31') et les surfaces de guidage (32,32') étant réalisées sous la forme de moyens stabilisateurs et empêchant, en combinaison avec les broches de retenue (10,10') et les évidements complémentaires (12,12'), les doigts de pince (2,2') montés sur les mâchoires (3,3') de basculer.

12. Pince de préhension (1) avec doigts de pince (2,2') selon l'une des revendications 1 à 10, **caractérisée en ce que** les bases (11,11') des doigts de pince (2,2') comprennent des surfaces antagonistes (16,16'; 18,18') qui, en position de butée (15,15') des doigts de pince (2,2'), viennent solliciter les surfaces de butée (17,17'; 19,19') des brides de mâchoires (6,6') et sont réalisées sous la forme de moyens stabilisateurs et, en combinaison avec les broches de retenue (10,10'), empêchent le doigt de pince (2,2') monté dans la pince de préhension (1) de basculer.

13. Pince de préhension (1) avec doigts de pince (2,2') selon la revendication 12, **caractérisée en ce que** les premiers moyens de retenue élastiques (22,22') sont réalisés sous la forme d'un ou de plusieurs évidements (24,24') dans les deuxièmes surfaces de butée (19,19') des premières brides de mâchoire (5,5') ou des deuxièmes brides de mâchoire (6,6') et **en ce que** les deuxièmes moyens de retenue élastiques (23,23') sont réalisés sous la forme de corps montés de façon élastique (25,25') dans un évidement (41,41') dans la deuxième surface antagoniste (18,18') respective.

14. Pince de préhension (1) avec doigts de pince (2,2') selon l'une des revendications 1 à 10, **caractérisée en ce que** les broches de retenue (10,10') de la pince de préhension (1) et les évidements complémentaires (12,12') de chaque base de doigt (11,11') sont réalisés sous la forme de moyens stabilisateurs et présentent une section transversale qui diffère de la forme circulaire, ce qui empêche le doigt de pince (2,2') monté dans la pince de préhension (1) dans sa position de butée de basculer.

15. Pince de préhension (1) avec doigts de pince (2,2') selon la revendication 11 ou 14, **caractérisée en ce que** les premiers moyens de retenue élastiques (22,22') sont réalisés sous la forme d'un ou plusieurs évidements (24,24') dans les premières brides de mâchoire (5,5') ou dans les deuxièmes brides de mâchoire (6,6'), et **en ce que** les deuxièmes moyens de retenue élastiques (23,23') sont réalisés sous la forme de corps (25,25') montés de façon élastique dans un évidement (41,41') dans une base de doigt (11,11') correspondante.

16. Pince de préhension (1) avec doigts de pince (2,2') selon l'une des revendications 1 à 13 ou 15, **caractérisée en ce que** les deux broches de retenue (10,10') sont réalisées coniques, présentent une section circulaire et un rapport plus grand diamètre de cône/longueur de cône inférieur à 1:3, de préférence égal à 1:5.

17. Robot (35) comprenant une combinaison pinces de préhension (1) / doigts de pince (2,2') selon l'une des revendications précédentes, le robot (35) comprenant une commande (36).

18. Robot (35) selon la revendication 17, **caractérisé en ce que** chacune des mâchoires (3,3') de la pince de préhension (1) comprend une unité de contact (29,29') qui fonctionne en liaison avec une unité d'analyse (38) de la commande (36) du robot (35), et **en ce que** chaque doigt de pince (2,2') pouvant être utilisé dans la pince de préhension (1) comprend une unité d'identification (30,30') qui, en position de butée (15,15') des doigts de pince (2,2'), est en contact de lecture avec l'unité de contact (29,29') de sorte que chaque doigt de pince (2,2') peut être identifié par l'unité d'analyse (38) du robot (35).

19. Procédé pour loger deux doigts de pince (2,2') avec une combinaison pinces de préhension (1) / doigts de pince (2,2') selon l'une des revendications 1 à 16, **caractérisé en ce que** ce procédé comprend les étapes consistant à :
(a) préparer deux doigts de pince (2,2') avec un support (26), ces doigts de pince (2,2') étant orientés l'un par rapport à l'autre et présentés par rapport à la pince de préhension (1) de telle façon que les mâchoires (3,3'), avec la pince de préhension (1), peuvent être amenées dans une position d'insertion (27) ;
(b) déplacer les mâchoires (3,3') de la pince de préhension (1) dans la position d'insertion (27), dans laquelle les broches de retenue (10,10') de la pince de préhension (1) viennent s'encastrer dans les évidements complémentaires (12,12') des bases (11,11') des deux doigts de pince (2,2') ;
(c) engager les broches de retenue (10,10') de la pince de préhension (1) dans les évidements complémentaires (12,12') des bases de doigt (11,11') des deux doigts de pince (2,2') jusqu'à ce que les doigts de pince (2,2') atteignent leur position de butée (15,15') sur les mâchoires (3,3') respectives ; et
(d) sortir les doigts de pince (2,2') montés sur la pince de préhension (1) du support (26).

20. Procédé selon la revendication 19, **caractérisé en ce que** l'encliquetage des broches de retenue (10,10') dans l'étape (c) se fait en serrant horizontalement les deux mâchoires (3,3') en direction du premier axe (4).

21. Procédé selon la revendication 19, **caractérisé en ce que** l'encliquetage des broches de retenue (10,10') dans l'étape (c) se fait par un mouvement d'avance horizontal des deux mâchoires (3,3') perpendiculairement au premier axe (4).

22. Procédé pour retirer les deux doigts de pince (2,2') avec une combinaison pinces de préhension (1) / doigts de pince (2,2') selon l'une des revendications 1 à 16, **caractérisé en ce que** ce procédé comprend les étapes consistant à :
(a) abaisser les deux doigts de pince (2,2') montés sur la pince de préhension (1) contre un support (26) avec une coulisse (28) et à déplacer la pince de préhension (1) jusqu'à ce que les doigts de pince (2,2') de la pince de préhension (1) atteignent une position d'extrémité ; et
(b) sortir les broches de retenue (10,10') de la pince de préhension (1) des évidements complémentaires (12,12') des bases (11,11') des deux doigts de pince (2,2') jusqu'à ce que les broches de retenue (10,10') de la pince de préhension (11) sortent des évidements complémentaires (12,12') de la base (11,11') des deux doigts de pince (2,2').

23. Procédé selon la revendication 22, **caractérisé en ce que** le déplacement de la pince de préhension (1) dans l'étape (a) se fait jusqu'à ce que les tiges de retenue (42,42') de la coulisse (28) viennent s'engager dans des surfaces de retenue (43,43') correspondantes des bases de doigt (11,11').

24. Procédé selon la revendication 22 ou 23, **caractérisé en ce que** la sortie des broches de retenue (10,10') dans l'étape (b) se fait en écartant horizontalement les deux mâchoires (3,3') en direction du premier axe (4).

25. Procédé selon la revendication 22 ou 23, **caractérisé en ce que** la sortie des broches de retenue (10,10') dans l'étape (b) se fait en tirant vers l'arrière horizontalement les deux mâchoires (3,3') perpendiculairement au premier axe (4).

26. Utilisation des procédés selon les revendications 19 et 22 pour remplacer de façon automatisée les deux doigts de pince (2,2') d'une pince de préhension (1) d'une installation de laboratoire robotisée (39).
